(19) Europäisches Patentamt
European Patent Office
Office européen des brevets

(11) **EP 4 174 609 B1**

(12) **EUROPEAN PATENT SPECIFICATION**

(45) Date of publication and mention
of the grant of the patent:
**14.05.2025  Bulletin 2025/20**

(21) Application number: **22180910.6**

(22) Date of filing: **24.06.2022**

(51) International Patent Classification (IPC):
**G05D 1/644** *(2024.01)*    **G01C 21/20** *(2006.01)*

(52) Cooperative Patent Classification (CPC):
**G05D 1/0217; G01C 21/206**

(54) **PATH PLANNING SYSTEM AND METHOD WITH INTELLIGENT SAMPLING AND TWO-WAY SEARCH (ITS)**

WEGPLANUNGSSYSTEM UND -VERFAHREN MIT INTELLIGENTER ABTASTUNG UND ZWEISEITIGER SUCHE (ITS)

SYSTÈME ET PROCÉDÉ DE PLANIFICATION DE TRAJET AVEC ÉCHANTILLONNAGE INTELLIGENT ET RECHERCHE BIDIRECTIONNELLE (ITS)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **30.07.2021  US 202163227755 P**
**07.06.2022  US 202217834027**

(43) Date of publication of application:
**03.05.2023  Bulletin 2023/18**

(73) Proprietor: **INTEL Corporation**
**Santa Clara, CA 95054 (US)**

(72) Inventors:
• **HAGHIGHIPANAH, Mohammad**
**Tigard, 97224 (US)**
• **CHATTOPADHYAY, Rita**
**Chandler, 85226 (US)**

(74) Representative: **2SPL Patentanwälte PartG mbB**
**Landaubogen 3**
**81373 München (DE)**

(56) References cited:
• **No Search**
• **KUFFNER J.J. ET AL: "RRT-connect: An efficient approach to single-query path planning", ROBOTICS AND AUTOMATION, 2000. PROCEEDINGS. ICRA '00. IEEE INTERNATIONAL CONFERENCE ON, vol. 2, 1 January 2000 (2000-01-01), Piscataway, NJ, USA, pages 995 - 1001, XP055983069, ISBN: 978-0-7803-5886-7, Retrieved from the Internet <URL:https:// ieeexplore.ieee.org/stampPDF/getPDF.jsp?tp=& arnumber=844730& ref=aHR0cHM6Ly9pZWVleHBsb3JlLmllZ WUub3JnL2RvY3VtZW50Lzg0NDczMA==> DOI: 10.1109/ROBOT.2000.844730**
• **MASHAYEKHI REZA ET AL: "Informed RRT*-Connect: An Asymptotically Optimal Single-Query Path Planning Method", IEEE ACCESS, IEEE, USA, vol. 8, 23 January 2020 (2020-01-23), pages 19842 - 19852, XP011770426, DOI: 10.1109/ ACCESS.2020.2969316**

EP 4 174 609 B1

## Description

### CROSS REFERENCE TO RELATED APPLICATIONS

This patent application claims the benefit of U.S. Provisional Patent Application No. 63/227,755, filed July 30, 2021, entitled "PATH PLANNING SYSTEM AND METHOD WITH INTELLIGENT SAMPLING AND TWO-WAY SEARCH (ITS),".

### TECHNICAL FIELD

The disclosure generally relates to motion planning for autonomous systems, including motion planning for autonomous agents.

### BACKGROUND

Autonomous Mobile Robots (AMRs) are key components in factories, warehouses, hospitals, or the like. AMRs implement perception and manipulation jointly to accomplish a given task by navigating an environment. AMRs may communicate and coordinating with one other as well as with a central entity. With AMRs, an obstacle-free path is determined to guide the robot from the starting position to the destination. These determinations are highly computational intensive leading to high latency factors. This may cause jitter in the movement of AMRs, especially when the destination position keeps changing with time.

Kuffner J.J. ET AL: "RRT-connect: An efficient approach to single-query path planning", Robotics and Automation, 2000. Proceedings. ICRA '00. IEEE International Conference on, vol. 2, 1 January 2000 (2000-01-01), pages 995-1001, XP055983069, discloses a randomized algorithm for solving single-query path planning problems in high-dimensional configuration spaces. The method works by incrementally building two Rapidly-exploring Random Trees (RRTs) rooted at the start and the goal configurations.

MASHAYEKHI REZA ET AL: "Informed RRT*-Connect: An Asymptotically Optimal Single-Query Path Planning Method", IEEE ACCESS, IEEE, USA, vol. 8, 23 January 2020 (2020-01-23), pages 19842-19852, XP011770426, discloses Informed RRT*-Connect, which is the informed version of RRT*-Connect that uses direct sampling after the first solution found.

### BRIEF DESCRIPTION OF THE DRAWINGS/FIGURES

The accompanying drawings, which are incorporated herein and form a part of the specification, illustrate the aspects of the present disclosure and, together with the description, and further serve to explain the principles of the disclosure and to enable a person skilled in the pertinent art to make and use the principles of the disclosure.

FIG. 1 illustrates a block diagram of an exemplary environment utilizing autonomous mobile robots (AMRs), in accordance with the disclosure.
FIG. 2A-B illustrate a block diagram of an exemplary autonomous agent, in accordance with the disclosure.
FIG. 2C illustrates a block diagram of an exemplary controller, in accordance with the disclosure.
FIG. 3 illustrates a block diagram of an exemplary computing device, in accordance with the disclosure.
FIG. 4 illustrates a flowchart of an intelligent sampling and two-way search (ITS) method in accordance with the disclosure.
FIGS. 5A-5B illustrate an exemplary global route planning with the local planner utilizing the sampling and search process of the ITS algorithm, in accordance with the disclosure.
FIG. 6A illustrates a path determination from a parent array in accordance with the disclosure.
FIG. 6B illustrates an optimization of the determined path in accordance with the disclosure.
FIGS. 7A-7C illustrate path comparisons of PRM+ITS path generations, in accordance with the disclosure, versus 2D Grid + A* and PRM + A* techniques.
FIGS. 8A-8B illustrate boxplots showing the computed time for the examples illustrated in FIGS. 7A-7C.
FIGS. 9A-9C illustrate path comparisons of PRM+ITS path generations, in accordance with the disclosure, versus 2D Grid + A* and PRM + A* techniques.
FIGS. 10A-10B illustrate boxplots showing the computed time for the examples illustrated in FIGS. 9A-9C.
FIGS. 11A-11B illustrate plots of a comparison of ITS and A*, in accordance with the disclosure, including comparisons of the mean path length and the mean compute time, for a first test case.
FIGS. 12A-11B illustrate plots of a comparison of ITS and A*, in accordance with the disclosure, including comparisons of the mean path length and the mean compute time, for a second test case.
FIG. 13 illustrates a map corresponds to an example of shelves within a warehouse in accordance with the disclosure.
FIGS. 14A-14D illustrate simulations where ITS and A* techniques were executed on a deterministic roadmap, in accordance with the disclosure.
FIGS. 15A-15B illustrate boxplots showing the path length and computed time for a third test case, in accordance with the disclosure.
FIGS. 16A-16B illustrate plots with comparisons of the mean compute time and path length for the first map, the second map, and the shelves map, in accordance with the disclosure.
FIGS. 17A-17B illustrate plots of mean compute times and path lengths a first PRM test case (based on the first map of FIG. 7D), in accordance with the disclosure.

FIGS. 18A-18B illustrate plots of mean compute times and path lengths a second PRM test case (based on the first map of FIG. 9D), in accordance with the disclosure.

FIGS. 19A-19B illustrate plots with comparisons of the mean compute time and path length for the first map, the second map, and the shelves map, in accordance with the disclosure.

FIGS. 20A-20D illustrate the gain factor for the ITS method according to the disclosure over A* in both DRM and PRM maps.

FIG. 21 shows a roadmap in accordance with the disclosure.

The present disclosure will be described with reference to the accompanying drawings. The drawing in which an element first appears is typically indicated by the leftmost digit(s) in the corresponding reference number.

DETAILED DESCRIPTION

In the following description, numerous specific details are set forth in order to provide a thorough understanding of the aspects of the present disclosure. However, it will be apparent to those skilled in the art that the aspects, including structures, systems, and methods, may be practiced without these specific details. The description and representation herein are the common means used by those experienced or skilled in the art to most effectively convey the substance of their work to others skilled in the art. In other instances, well-known methods, procedures, components, and circuitry have not been described in detail to avoid unnecessarily obscuring aspects of the disclosure.

Current techniques for AMR route planning and navigation include, for example, 2D grid A*, and Rapidly Exploring Random Tree (RRT). These techniques have various drawbacks. Running A* on 2D grid map can get computationally very expensive depending on the size and resolution of the grid. While RRT is rapidly exploring the configuration space, it is designed for single inquires and therefore is not a suitable method for continuous multi-planning scenarios.

The present disclosure provides an advantageous path planning system and method that includes but not limited to a Probabilistic Road Map (PRM) having an adaptive sampling technique with a rapid two-way search process to compute a global path for the AMR's navigation. With PRM and a two-way search strategy, the path planning system and method of the present disclosure advantageously provides a parallel or simultaneous check for feasibility of adding a bridge/edge between the start and goal nodes at each iteration to reduce the time and computational resources. Determined edges can be added to the PRM for future inquiries.

The path planning system and method may implement a path planning algorithm (intelligent sampling and two-way search (ITS) algorithm) configured to determine one or more paths (global and/or local paths) for one or more AMRs in a specific environment to enable the AMRs to complete tasks in an efficient manner. The path planning algorithm may be executed by the AMR, a central controller, or a combination of both the AMR and the central controller in a collaborative manner. The path planning algorithm may update a shared model of the environment, typically a graph representation of the region (e.g. operating environment) that is divided into smaller regions or cells, which considers dynamic obstacles and the probability of collisions so that each of the AMRs (and/or an external global controller) can formulate a path that allows each AMR to accomplish its task without interruption in the shortest time possible.

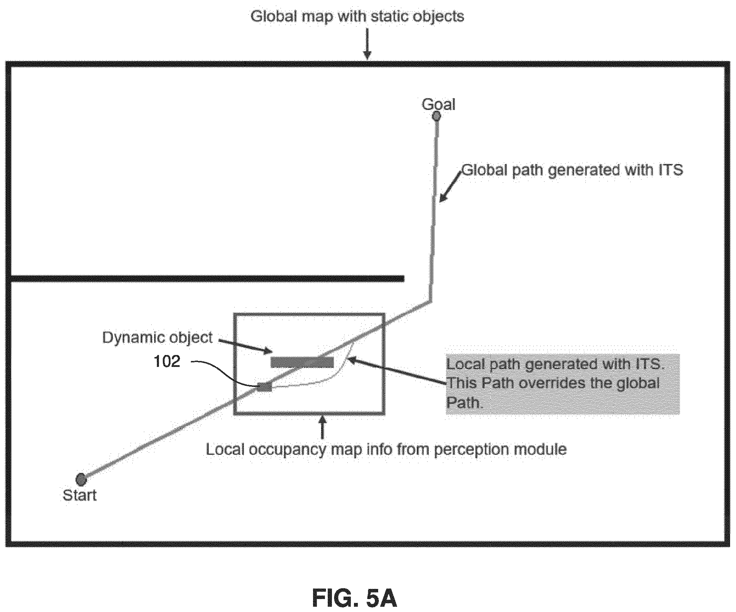

In global path planning, the shortest path is found based on global map that includes static objects, such as walls and the footprint of the environment. For dynamic obstacles, such as other robots, humans, forklifts, etc., the local planner performs obstacle avoidance. In AMR navigation, the navigation task includes: localization, mapping, global path planning, and local path planning. A local planner is configured to avoid obstacles, whereas the global path planner is configured to determine the global path (route). In this example, the global path planner uses the global map of the environment as an input to generate the global path and the local planner runs continuously to update the global path in real-time to actuate the robot and avoid obstacles. This global route planning with the local planner utilizing the intelligent sampling and ITS search process is illustrated in FIGS. 5A-5B.

Alternatively, the global path planner algorithm may be run continuously for obstacle avoidance. In this example, instead of inputting the global map to the global planner, we can input the local map (e.g. a smaller map around the AMR with dynamic obstacles), and perform a search method in real-time continuously.

In determining a navigational solution for an AMR or other autonomous agent, the system and methods of the present disclosure include determining a roadmap of the workspace, and determining a search strategy to find a path from the given map. The present disclosure provides advantageous search strategies that significantly reduce the processing resources and time to conduct the search. As described in more detail below, the search strategies provide a roadmap to search the global path needed for the AMRs to navigate toward the desired destination. The roadmap may be constructed offline in a form of a deterministic graph, probabilistic graph, Voronoi graph, skeletonization graph, visibility graph, or other graph as would be understood by one of ordinary skill in the art. As is illustrated in the experimental data provided in the drawings, the present disclosure provides an advantageously increase in performance over conventional search strategies (e.g. A*), including in both deterministic and probabilistic roadmaps.

With the intelligent sampling and two-way search (ITS) algorithm according to the disclosure, the number of nodes is determined based on the density required and the occupancy ratio of the environment. This advantageously reduces the complexity in the path generation and increases its robustness. The ITS algorithm further includes an iterative two-way search from the start node and the end node based on a cost function to select the next nodes at each iteration. At every iteration, an attempt is made to connect the selected nodes with each other to terminate early, when possible.

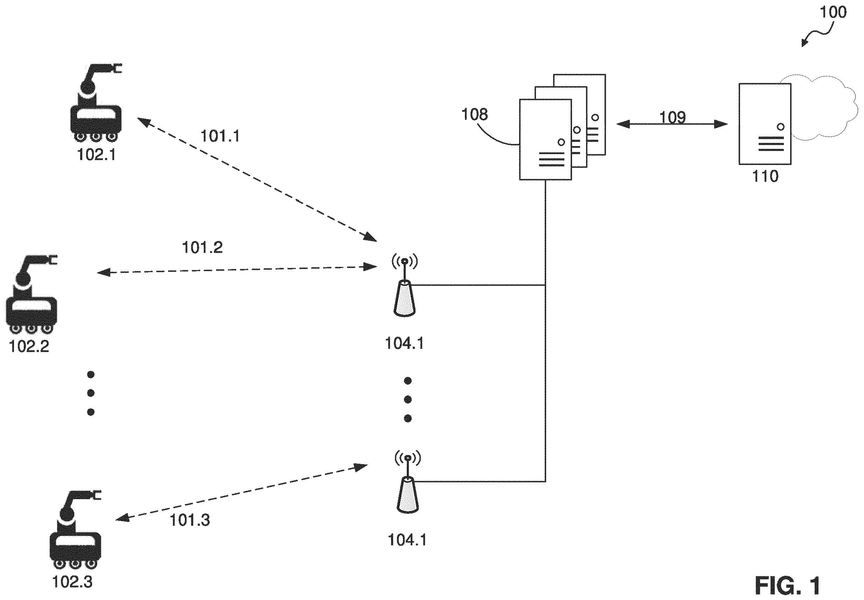

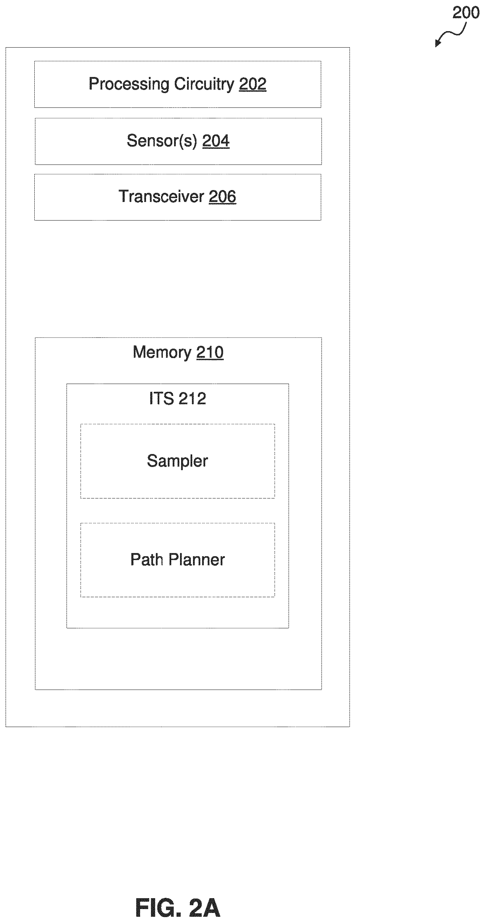

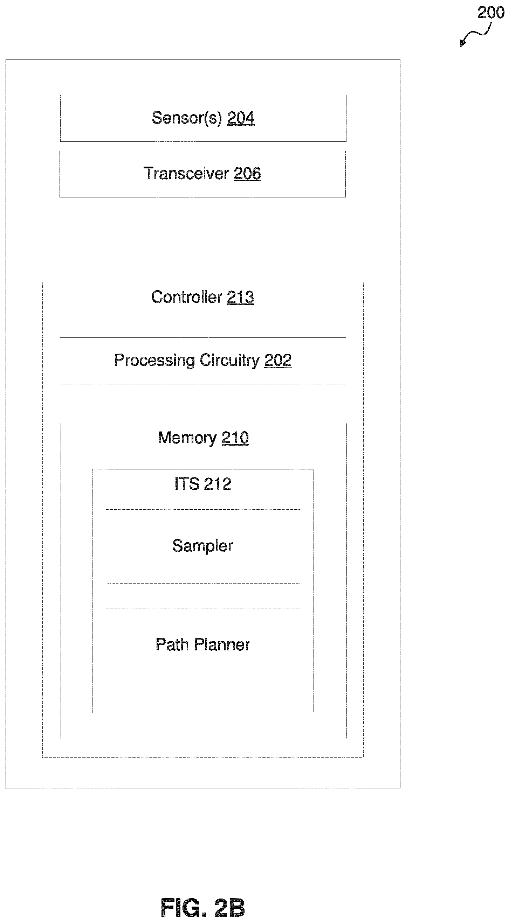

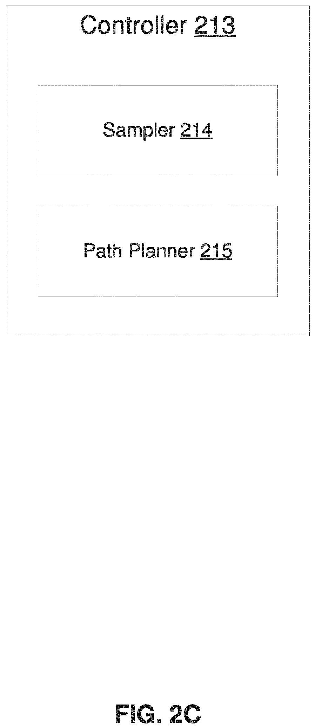

FIG. 1 illustrates a block diagram of an exemplary environment utilizing autonomous mobile robots (AMRs), in accordance with the disclosure. As shown in FIG. 1, the environment 100 supports any suitable number N of AMRs 102, with three AMRs 102.1-102.3 being shown for ease of explanation. The environment 100 may be any suitable type of environment that uses the AMRs 102, such as a factory, warehouse, hospital, office building, etc. The AMRs 102 may have any suitable type of design and function to communicate with other components of a network infrastructure as further disused below. The AMRs 102 may operate autonomously or semi-autonomously and be configured as mobile robots that move within the environment 100 to complete specific tasks. The AMRs 102 may include any suitable number and/or type of sensors to enable sensing of their surroundings and the identification of feedback regarding the environment 100. The AMRs 102 may further be configured with any suitable number and/or type of wireless radio components to facilitate the transmission and/or reception of data. For example, the AMRs 102 may transmit data indicative of current tasks being executed, location, orientation, velocity, trajectory, heading, etc. within the environment 100 (via transceiver 206 as shown in FIG. 2). As another example, the AMRs 102 may receive commands and/or planned path information from the computing device 108, which each AMR 102 may execute to navigate to a specific location within the environment 100. Although not shown in FIG. 1 for purposes of brevity, the AMRs 102 may additionally communicate with one another to determine information (e.g. current tasks being executed, location, orientation, velocity, trajectory, heading, etc.) with respect to the other AMRs 102, as well as other information such as sensor data generated by other AMRs 102.

Although the disclosure includes examples of the environment 100 being a factory or warehouse that supports AMRs 102 operating within such an environment, this is by way of example and not limitation. The teachings of the disclosure may be implemented in accordance with any suitable type of environment and/or type of mobile agent. For instance, the environment 100 may be outdoors and be identified with a region such as a roadway that is utilized by autonomous vehicles. Thus, the teachings of the disclosure are applicable to AMRs as well as other types of autonomous agents that may operate in any suitable type of environment based upon any suitable application or desired function.

The AMRs 102 operate within the environment 100 by communicating with the various components of the supporting network infrastructure. The network infrastructure may include any suitable number and/or type of components to support communications with the AMRs 102. For example, the network infrastructure may include any suitable combination of wired and/or wireless networking components that operate in accordance with any suitable number and/or type of communication protocols. For instance, the network infrastructure may include interconnections using wired links such as Ethernet or optical links, as well as wireless links such as Wi-Fi (e.g. 802.11 protocols) and cellular links (e.g. 3GPP standard protocols, LTE, 5G, etc.). The network infrastructure may be, for example, an access network, an edge network, a mobile edge computing (MEC) network, etc. In the example shown in FIG. 1, the network infrastructure includes one or more cloud servers 110 that enable a connection to the Internet, which may be implemented as any suitable number and/or type of cloud computing devices. The network infrastructure may additionally include a computing device 108, which may be implemented as any suitable number and/or type of computing device such as a server. The computing device 108 may be implemented as an Edge server and/or Edge computing device.

According to the disclosure, the computing device 108 may communicate with the one or more cloud servers 110 via one or more links 109, which may represent an aggregation of any suitable number and/or type of wired and/or wireless links as well as other network infrastructure components that are not shown in FIG. 1 for purposes of brevity. For instance, the link 109 may represent additional cellular network towers (e.g. one or more base stations, eNode Bs, relays, macrocells, femtocells, etc.). According to the disclosure, the network infrastructure may further include one or more access points (APs) 104. The APs 104 which may be implemented in accordance with any suitable number and/or type of AP configured to facilitate communications in accordance with any suitable type of communication protocols. The APs 104 may be configured to support communications in accordance with any suitable number and/or type of communication protocols, such as an Institute of Electrical and Electronics Engineers (IEEE) 802.11 Working Group Standards. Alternatively, the APs 104 may operate in accordance with other types of communication standards other than the 802.11 Working Group, such as cellular based standards (e.g. "private cellular networks) or other local wireless network systems, for instance. The AMRs 102 may communicate directly with the computing device 108 or other suitable components of the network infrastructure without the need to use the APs 104.

In the environment 100 as shown in FIG. 1, the computing device 108 is configured to communicate with each of the AMRs 102 to receive data from the AMRs 102 and to transmit data to the AMRs 102. This functionality may be additionally or alternatively be performed by other network infrastructure components that are capable of communicating directly or indirectly with the AMRs 102, such as the one or more cloud servers 110, for instance. However, the local nature of the computing device 108 may provide additional advantages in that the communication between the computing device 108 and the AMRs 102 may occur with reduced network latency. Thus, the aspects described herein use the computing device 108 as the primary example when describing this functionality, although it is understood that this is by way of example and not limitation.

The computing device 108 may thus receive sensor data from each for the AMRs 102 via the APs 104 and use this sensor data, together with other information about the environment 100 that is already known (e.g. data regarding the size and location of static objects in the environment 100), to generate a shared environment model that represents the environment 100. This shared environment model may be represented as a navigation grid having cells of any suitable size and/or shape, with each cell having specific properties with respect to the type of object contained (or not contained) in the cell, whether an object in the cell is static or moving, etc., which enables the environment model to accurately depict the nature of the environment 100. As an example, grid cells may be squares of predetermined sizes (e.g. 80 mm) based upon a desired granularity for a particular environment and accompanying application. The environment model may thus be dynamically updated by the AMRs 102 directly and/or via the computing device 108 on a cell-by-cell basis as new sensor data is received from the AMRs 102. The updates to the shared environment model thus reflect any recent changes in the environment 100 such as the position and orientation of each of the AMRs 102 and other obstacles that may change in a dynamic manner within the environment 100 (e.g. people, forklifts, machinery, etc.). The shared environment model may additionally or alternatively be updated based upon data received from other sensors or devices within the environment 100, such as stationary cameras for example, which may enable a more accurate depiction of the positions of the AMRs 102 without relying of AMR communications.

Each AMR 102 executes a path planning algorithm and uses the shared environment model at a particular time (e.g. the most recently constructed) to calculate navigational paths for each AMR 102. These navigational paths include sets of intermediate points ("waypoints") or nodes that define an AMR trajectory within the environment 100 between a starting point (e.g. its current location in the environment 100) to a destination (goal point) within the environment 100. That is, the waypoints indicate to the AMRs how to execute a planned navigational path to proceed to each of the intermediate points at a specific time until a destination is reached.

The computing device (controller) 108 may alternatively or additionally (in collaboration with one or more of the AMRs 102) calculate navigational paths for one or more of the AMRs 102. Alternatively, or additionally, the cloud server(s) 110 may be configured to calculate navigational paths for one or more of the AMRs 102, which may then be transmitted to the AMRs 102. It should be appreciated that any combination of the AMRs 102, computing device 108, and cloud server(s) 110 may calculate the navigational paths. The AMRs 102, computing device 108, and/or cloud server(s) 110 may include processing circuitry that is configured to perform the respective functions of the AMRs 102, computing device 108, and/or cloud server(s) 110. One or more of these devices may further be implemented with machine-learning capabilities.

Information dynamically discovered by the AMRs 102 may be, for instance, a result of each AMR 102 locally processing its sensor data. The updated shared environment model may be maintained by the central controller (computing device 108) and shared with each of the AMRs 102 as well being used for planning tasks. Thus, at any given point in time, the AMRs 102 may be attempting to determine which cells to add to a particular route (e.g. a planned path) or move to so that the AMR's assigned task may be accomplished in the most efficient manner. In other words, because of the dynamic nature of the environment 100, each AMR 102 calculates its own navigation path in a continuous and iterative manner using iterative updates that are provided to the shared environment model. Thus, the shared environment model may be stored in the computing device 108 and/or locally in a memory associated with or otherwise accessed by each one of the AMRs 102. Additionally, or alternatively, the shared environment model may be stored in any other suitable components of the network infrastructure or devices connected thereto. In any event, the AMRs 102 may iteratively receive or otherwise access the shared environment model, including the most recent updates, to perform navigation path planning functions as discussed herein. The shared environment model may thus be updated as new sensor data is received by the central controller and processed and/or processed locally by the AMRs 102, and be performed in a periodic manner or in accordance with any suitable schedule.

With reference to FIG. 2, the AMRs 102 may implement a suite of onboard sensors 204 to generate sensor data indicative of the location, position, velocity, heading orientation, etc. of the AMR 102 within the environment 100. These sensors 204 may be implemented as any suitable number and/or type that are generally known and/or used for autonomous navigation and environmental monitoring. Examples of such sensors may include radar, LIDAR, optical sensors, cameras, compasses, gyroscopes, positioning systems for localization, accelerometers, etc. Thus, the sensor data may indicate the presence of and/or range to various objects near each AMR 102. Each AMR 102 may additionally process this sensor data to identify obstacles or other relevant information within the environment 100 that will impact the shared environment model. The AMRs 102 may then use the shared environment model to iteratively calculate respective navigation paths, as further discussed herein. The AMRs 102 may also be any suitable number and/or type of hardware and/or software configurations to facilitate autonomous navigation functions within the environment 100, including known configurations. For example, each AMR 102 may implement a controller that may comprise one or more processors or processing circuitry 202, which may execute software that is installed on a local memory 210, implemented within the processing circuitry 202, and/or otherwise accessible to the processor and/or processing circuitry 202, to perform various autonomous navigation-related functions.

The AMR 102 may use onboard sensors 204 to perform pose estimation and/or to identify e.g. a position, orientation, velocity, direction, and/or location of the AMR 102 within the environment 100 as the AMR 102 moves along a particular planned path. The processing circuitry 202 can execute the ITS algorithm 212 stored in memory 210 to execute path planning and sampling functionalities for navigation-related functions (e.g. SLAM, octomap generation, multi-robot path planning, etc.) of the AMR 102.

AMR Design and Configuration

FIG. 2 illustrates a block diagram of an exemplary autonomous agent, in accordance with the disclosure. The autonomous agent 200 as shown and described with respect to FIG. 2 may be identified with one or more of the AMRs 102 as shown in FIG. 1 and discussed herein, for instance. The autonomous agent 200 may include processing circuitry 202, one or more sensors 204, a transceiver 206, and a memory 210. The components shown in FIG. 2 are provided for ease of explanation, and the autonomous agent 200 may implement additional, less, or alternative components as those shown in FIG 2.

The processing circuitry 202 may be configured as any suitable number and/or type of computer processors, which may function to control the autonomous agent 200 and/or other components of the autonomous agent 200. The processing circuitry 202 may be identified with one or more processors (or suitable portions thereof) implemented by the autonomous agent 200.

The processing circuitry 202 may be configured to carry out instructions to perform arithmetical, logical, and/or input/output (I/O) operations, and/or to control the operation of one or more components of autonomous agent 200 to perform various functions associated with the aspects as described herein. For example, the processing circuitry 202 may include one or more microprocessor cores, memory registers, buffers, clocks, etc., and may generate electronic control signals associated with the components of the autonomous agent 200 to control and/or modify the operation of these components. For example, the processing circuitry 202 may control functions associated with the sensors 204, the transceiver 206, and/or the memory 210. The processing circuitry 202 may additionally perform various operations to control the movement, speed, and/or tasks executed by the autonomous agent 200, which may be based upon global and/or local path planning algorithms, as discussed herein.

The sensors 204 may be implemented as any suitable number and/or type of sensors that may be used for autonomous navigation and environmental monitoring. Examples of such sensors may include radar, LIDAR, optical sensors, cameras, compasses, gyroscopes, positioning systems for localization, accelerometers, etc.

The transceiver 206 may be implemented as any suitable number and/or type of components configured to transmit and/or receive data packets and/or wireless signals in accordance with any suitable number and/or type of communication protocols. The transceiver 206 may include any suitable type of components to facilitate this functionality, including components associated with known transceiver, transmitter, and/or receiver operation, configurations, and implementations. Although depicted in FIG. 2 as a transceiver, the transceiver 206 may include any suitable number of transmitters, receivers, or combinations of these that may be integrated into a single transceiver or as multiple transceivers or transceiver modules. For example, the transceiver 206 may include components typically identified with an RF front end and include, for example, antennas, ports, power amplifiers (PAs), RF filters, mixers, local oscillators (LOs), low noise amplifiers (LNAs), upconverters, downconverters, channel tuners, etc. The transceiver 206 may also include analog-to-digital converters (ADCs), digital to analog converters, intermediate frequency (IF) amplifiers and/or filters, modulators, demodulators, baseband processors, and/or other communication circuitry as would be understood by one of ordinary skill in the art.

The memory 210 stores data and/or instructions such that, when the instructions are executed by the processing circuitry 202, cause the autonomous agent 200 to perform various functions as described herein. The memory 210 may be implemented as any well-known volatile and/or non-volatile memory. The memory 210 may be implemented as a non-transitory computer readable medium storing one or more executable instructions such as, for example, logic, algorithms, code, etc. The instructions, logic, code, etc., stored in the memory 210 are represented by the various modules as shown in FIG. 2, which may enable the features aspects disclosed herein to be functionally realized. For example, the memory 210 may include the ITS module 212 representing the ITS algorithm. The ITS algorithm may further include a sampler configured to perform the sampling operations and a path planner configured to perform the path planning operations. For hardware implementations, the modules shown in FIG. 2 associated with the memory 210 may include instructions and/or code to facilitate control and/or monitor the operation of such hardware components. In other words, the modules shown in FIG. 2 are provided for ease of explanation regarding the functional association between hardware and software components. Thus, aspects include the processing circuitry 202 executing the instructions stored in these respective modules in conjunction with one or more hardware components to perform the various functions described herein. For example, the processing circuity 202 configured to implement the sampler module of the ITS algorithm 212 forms a sampler 214 (e.g. sampling means) configured to perform one or more sampling operations. Similarly, the processing circuity 202 configured to implement the path planner module of the ITS algorithm 212 forms a path planner 215 (e.g. path planning means) configured to perform one or more path planning operations. The sampler 214 and path planner 215 may collectively form a controller 213 as illustrated in FIGS. 2B and 2C. The controller 215 may be implemented within an autonomous agent, such as autonomous agent 102/200, but the disclosure is not limited thereto.

Computing Device (Controller) design and configuration

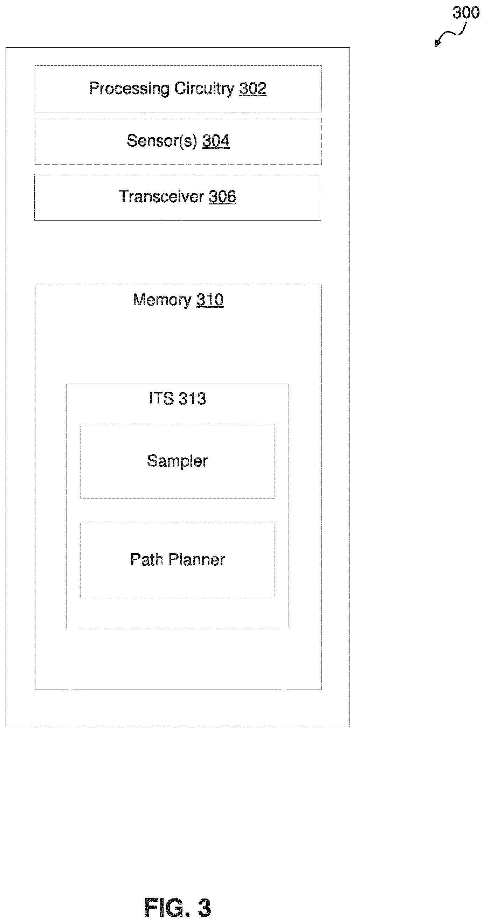

FIG. 3 illustrates a block diagram of an exemplary computing device 300, in accordance with the disclosure. The computing device 300 as shown and described with respect to FIG. 3 may be identified with the computing device 108 and/or server 110 as shown in FIG. 1 and discussed herein, for instance. The computing device 300 may include processing circuitry 302, one or more sensors 304, a transceiver 306, and a memory 310. In some examples, the computer device 300 is configured to interact with one or more external sensors as an alternative or in addition to including internal sensors 304. The components shown in FIG. 3 are provided for ease of explanation, and the computing device 300 may implement additional, less, or alternative components as those shown in FIG 3.

The processing circuitry 302 may be configured as any suitable number and/or type of computer processors, which may function to control the computing device 300 and/or other components of the computing device 300. The processing circuitry 302 may be identified with one or more processors (or suitable portions thereof) implemented by the computing device 300.

The processing circuitry 302 may be configured to carry out instructions to perform arithmetical, logical, and/or input/output (I/O) operations, and/or to control the operation of one or more components of computing device 300 to perform various functions associated with the aspects as described herein. For example, the processing circuitry 302 may include one or more microprocessor cores, memory registers, buffers, clocks, etc., and may generate electronic control signals associated with the components of the computing device 300 to control and/or modify the operation of these components. For example, the processing circuitry 302 may control functions associated with the sensors 304, the transceiver 306, and/or the memory 310.

The sensors 304 may be implemented as any suitable number and/or type of sensors that may be used for autonomous navigation and environmental monitoring. Examples of such sensors may include radar, LIDAR, optical sensors, cameras, compasses, gyroscopes, positioning systems for localization, accelerometers, etc. In some examples, the computing device 300 is additionally or alternatively configured to communicate with one or more external sensors similar to sensors 304.

The transceiver 306 may be implemented as any suitable number and/or type of components configured to transmit and/or receive data packets and/or wireless signals in accordance with any suitable number and/or type of communication protocols. The transceiver 306 may include any suitable type of components to facilitate this functionality, including components associated with known transceiver, transmitter, and/or receiver operation, configurations, and implementations. Although depicted in FIG. 3 as a transceiver, the transceiver 306 may include any suitable number of transmitters, receivers, or combinations of these that may be integrated into a single transceiver or as multiple transceivers or transceiver modules. For example, the transceiver 306 may include components typically identified with an RF front end and include, for example, antennas, ports, power amplifiers (PAs), RF filters, mixers, local oscillators (LOs), low noise amplifiers (LNAs), upconverters, downconverters, channel tuners, etc. The transceiver 306 may also include analog-to-digital converters (ADCs), digital to analog converters, intermediate frequency (IF) amplifiers and/or filters, modulators, demodulators, baseband processors, and/or other communication circuitry as would be understood by one of ordinary skill in the art.

The memory 310 stores data and/or instructions such that, when the instructions are executed by the processing circuitry 302, cause the computing device 300 to perform various functions as described herein. The memory 310 may be implemented as any well-known volatile and/or non-volatile memory. The memory 310 may be implemented as a non-transitory computer readable medium storing one or more executable instructions such as, for example, logic, algorithms, code, etc. The instructions, logic, code, etc., stored in the memory 310 are represented by the various modules as shown in FIG. 3, which may enable the features aspects disclosed herein to be functionally realized. For example, the memory 310 may include the ITS module 312 representing the ITS algorithm. The ITS algorithm may further include a sampler configured to perform the sampling operations and a path planner configured to perform the path planning operations. For hardware implementations, the modules shown in FIG. 3 associated with the memory 310 may include instructions and/or code to facilitate control and/or monitor the operation of such hardware components. In other words, the modules shown in FIG. 3 are provided for ease of explanation regarding the functional association between hardware and software components. Thus, aspects include the processing circuitry 302 executing the instructions stored in these respective modules in conjunction with one or more hardware components to perform the various functions described herein.

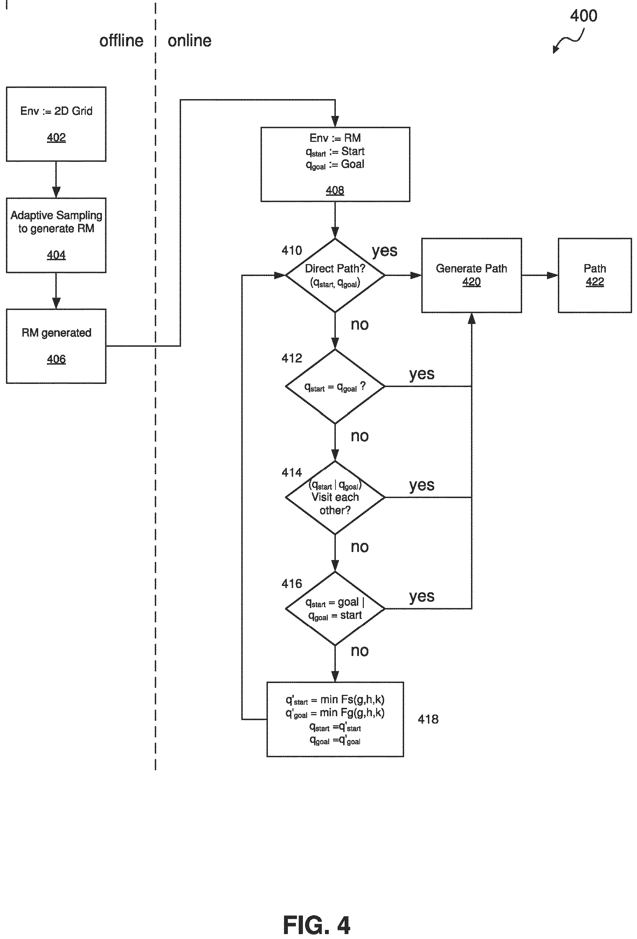

Turning now to FIG. 4, global path planning using the ITS algorithm is discussed in more detail. The discussion of the ITS algorithm may be executed by the AMRs 102 (and/or the computing device 108) to perform autonomous navigation using the environment model. The ITS algorithm may be performed iteratively via the controller (processing circuitry 202) implemented via each AMR 102. Using the ITS algorithm, the AMRs 102 determine a planned path to a destination or goal cell from its starting point by iteratively applying an inventive cost function across all immediate neighboring cells of the environment until a goal/destination cell is reached.

In the flowchart 400 of FIG. 4, the occupancy grid is provided at operation 402 as an input to the ITS algorithm.

At operation 404, the AMR 102 (e.g. processing circuitry 202) performs adaptive sampling using the ITS algorithm to generate a roadmap (RM) based on the occupancy grid. The generated RM is then provided at operation 406. An example adaptive sampling function of the ITS algorithm according to the disclosure is provided below and expressed as Equation 1:

$$S = \frac{W*H}{w*h} * n * k \qquad (1)$$

In Equation 1, $S$ is the number of samples, $W$ and $H$ correspond to the grid map width and heights, respectively, $w$ and $h$ are user-desired window widths and heights, respectively, $k$ is the occupancy ratio of the map, and n corresponding to the user-desired resolution (i.e. the number of samples per area ($w$ x $h$). The value of $k$ may vary between 0 and 1.

The $k$ value may be obtained from occupancy information of the environment, for example, from an occupancy ratio of the saved map, one or more sensors in the environment (e.g. cameras, infrared sensors, LIDAR sensors, radar, etc.) If the map is totally unoccupied the $k$ value will be zero, thus, there is no need to generate any samples, as the source and destination can be linked with a direct path. Conversely, for a $k$ value close to 1, the map is highly occupied, which necessitates more sample points for path determinations.

The roadmap (RM) may be constructed offline and then used for one or more queries to find the global path online. In some examples, multiple roadmaps may be constructed in advance and saved for later use. The various roadmaps may then be varied based on one or more parameters, such as time-of-day, dates, different n values, or the like. Alternatively, as discussed in more detail below, the roadmap (RM) may be constructed dynamically as the AMR traverses the environment.

In operation 408, the RM (as the environment) and the start ($q_{start}$) and goal ($q_{goal}$) points are defined.

After operation 408, operations 410-418 are iteratively performed until a path is determined. At operation 410, it is determined if there is a direct path between the start ($q_{start}$) and goal ($q_{goal}$) node. If there is a direct path, the flowchart transitions to operation 420 where the path is generated. If there is no direct path, the flowchart transitions to operation 412.

To create a direct path from $q'_{start} \rightarrow q'_{goal}$, the path is discretized with a predefined step size based on the resolution of the costmap. Each discretized cell is checked against the costmap to determine if the cell is occupied or not. If all the steps are obstacle free the path can be created, otherwise the function will return false.

At operation 412, it is determined if the source and goal node meet ($q_{start} = q_{goal}$). If the source and goal nodes meet, the flowchart transitions to operation 420 where the path is generated. Otherwise, the flowchart transitions to operation 414.

At operation 414, it is determined if source nodes cross one of the previously visited nodes of the goal nodes, or if goal nodes cross one of the previously visited nodes of the source nodes ($q_{start} | q_{goal}$). If so, the flowchart transitions to operation 420 where the path is generated. Otherwise, the flowchart transitions to operation 416.

At operation 416, it is determined if either the goal node reaches the start position or the source node reaches the destination position ($q_{start=goal} | q_{goal=start}$). If so, the flowchart transitions to operation 420 where the path is generated. Otherwise, the flowchart transitions to operation 418.

At operations 418, a node selection process is performed based on the cost function to select a new node ($q_{start} \rightarrow q'_{start}$ and $q_{goal} \rightarrow q'_{goal}$). An example of the cost function according to the disclosure is provided below and expressed as Equation 2:

$$F = g + h + k \qquad (2)$$

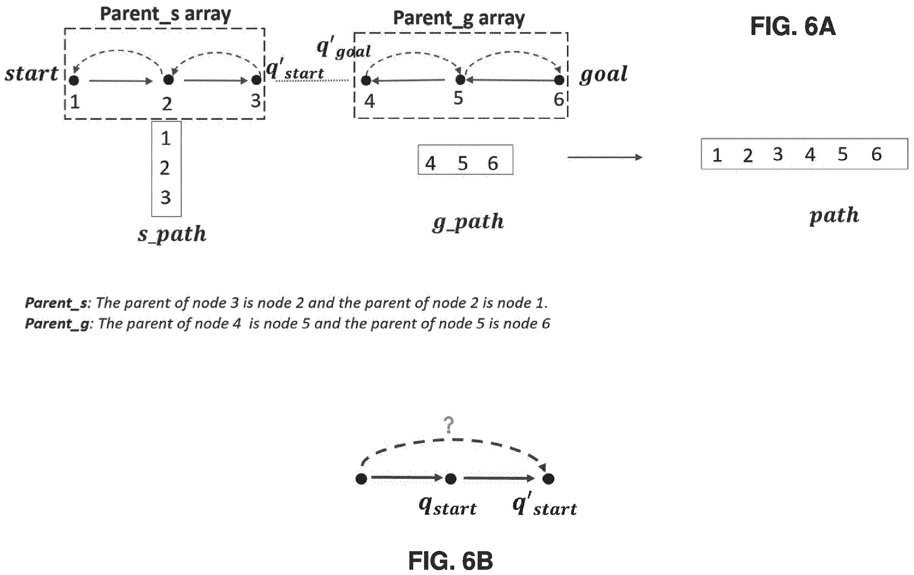

When traversing in the direction from the start to the goal, $g$ is the Euclidean distance from $q_{start} \rightarrow q'_{start}$, $h$ is the Euclidean distance from $q'start \rightarrow q_{goal}$, and $k$ is the Euclidean distance from $q'_{start} \rightarrow goal$. When traversing in the direction from the goal to the start, $g$ is the Euclidean distance from $q_{goal} \rightarrow q'_{goal}$, $h$ is the Euclidean distance from $q'_{goal} \rightarrow q_{start}$ and $k$ is the Euclidean distance from $q'_{goal} \rightarrow start$. Further, as illustrated in FIG. 6A, after the node selection, the parent of these selected nodes will be stored in a **parent** array, which includes a further optimization (as illustrated in FIG. 6B). For example, if there is an edge between the parent of $q_{start}$ and $q'start,$ the parent of $q_{start}$ will be assigned as the parent of $q'start,$ otherwise the parent of $q'start$ would be $q_{start}.$ Similarly, if there is an edge between the parent of $q_{goal}$ and $q'goal,$ the parent of $q_{goal}$ will be assigned as the parent of $q'_{goal},$ otherwise the parent of $q'_{goal}$ would be $q_{goal}.$

The ITS algorithm is configured to perform a two-way search that simultaneously selects the next two nodes which are optimal from both source (start) and destination (goal). In particular, the $q'start$ and $q'_{goal}$ are simultaneously selected. For example, to select $q'start,$ the neighbor of $q_{start}$ which minimizes the cost based on $F = g + h + k$ is selected while simultaneously selecting $q'_{goal}$ by selecting the neighbor of $q_{goal}$ which minimizes the cost based on $F = g + h + k$. According to the disclosure, the selection of the two nodes ($q'_{start}$ and $q'_{goal}$) may be performed in parallel or simultaneously. For example, the two nodes may be selected in parallel, for example, using parallel hardware or in a multi-thread software operation. These parallel selections may be performed simultaneously in some configurations, but is not limited thereto. In these examples, the two nodes are selected in the same iteration. The selection may alternatively be performed such that the two nodes are serially selected one after another, but within the same iteration. In this example, the serial selection may be performed within the same operation (e.g. operation 418) of the same iteration. In some examples, the serial selections are performed across two operations, but within the same iteration.

After operation 418, the flowchart returns to operation 410 for another iteration, where the process iteratively repeats until the path is found and generated at operation 420. The generated path is then provided at operation 422. If a direct path is not found between the $q_{start}$ and $q_{goal},$ the $q_{start}$ and $q_{goal}$ will be set equal to $q'start$ and $q'_{goal}$ respectively, as per operation 418 in the flow chart, for the next iteration. If a path is found, then the iterative process will terminate and transition to operation 420. At operation 420, from the parent arrays, the algorithm will traverse backwards from the $q'_{start}$ and $q'_{goal}$ toward the start and goal position (see FIG. 6A). The path from the $q'_{start}$ to the start position will be stored in a stack (**s_path**) and the path from the $q'_{goal}$ to the goal position will be stored in a queue (**g_path**). Once the **s_path** and **g_path** is found, the final path is determined by combining the two paths (see FIG. 6A).

Turning to FIGS. 5A-5B, in path planning, the shortest path is found based on global map that includes static objects, such as walls and the footprint of the environment. As discussed above, the number of nodes/-samples needed to generate the global roadmap is generated based on Equation 1, and the global path is determined using the ITS algorithm as illustrated in FIG. 4.

For dynamic obstacles, such as other robots, humans, forklifts, etc., the local planner performs obstacle avoidance. The two-dimensional (2D) grid local costmap may be converted periodically, in real-time (online), to a roadmap. The number of samples for each of the adaptive/dynamic conversions is again determined using Equation 1. In particular, the local 2D Grid map or occupancy map which shows all the obstacles around the AMR 102 is converted to the roadmap (RM) online, in real-time. The number of the samples needed for the Roadmap gets computed based on Equation 1. The sampler of the ITS algorithm adaptively updates the number of samples needed by varying $n$ and $k$ parameters of Equation 1. For example, the adaptive $k$ value may be dynamically updated based on the perception module (sensor 204, such as a camera, LIDAR, radar, etc.) and the adaptive $n$ value may be dynamically updated based on the time/date, distance to the goal, zones in the map, and/or a user-desired resolution. As an example, it may be desired that the $n$ value is dynamically updated based on time/date. That is, at some time of a day or date, the workspace of the AMR 102 may be, for example, more congested and the system is aware of this congestion based on, for example, historical data. As the number of obstacles (congestion) increases, the number of the samples is increased to have a higher resolution local roadmap to increase the obstacle avoidance performance. As another example, based on the distance to the goal, it may be desired to increase/decrease the number of nodes based on different applications. In this example, the number of nodes may be increased as the AMR 102 arrives closer to goal location so as to increase the resolution of the map to more accurately direct the AMR 102 to the goal location. As another example, particular zones in the map may have been marked to be a cautious, danger, and/or slow zones. These areas may necessitate a higher resolution map so as to increase movement accuracy in the more hazardous zone. Conversely, in other zones, the resolution may be reduced where accuracy can be decreased without unnecessarily placing the AMR in an unsafe operating condition. Once the local roadmap is being constructed periodically in real-time, the local roadmap will be used by the path planner of the ITS algorithm planner to update the original global path.

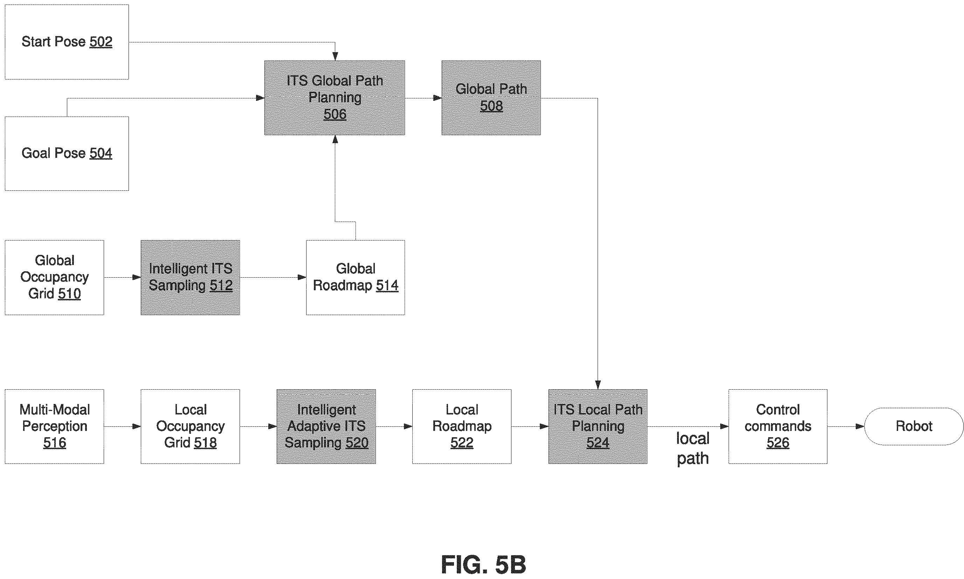

This global-local path planning is illustrated in FIG. 5B, which shows a path planning architecture. The sampler of the ITS algorithm at 512 determines the global roadmap 514 based on the global occupancy grid 510. The ITS algorithm (at 506) is configured to determine a global path 508 based on the start and goal positions 502, 504 and the global roadmap 514 using the parallel or simultaneous two-way search. The global path 508 is then provided for local path planning at 524. Using the sensors 204 (multi-modal perception 516) of the AMR 102, the local occupancy grid 518 is determined. The Local roadmap 522 is then determined based on the adaptive sampling (520) using Equation 1, with one or more of the variables (e.g. *k, n*) being dynamically adjusted. The local planner feature of the ITS algorithm (524) then determines the local path based on the global path 508 and the adapted local roadmap 522. Based on this local path, the processing circuitry of the AMR generates control commands 526 to control the movement of the AMR. In summary, the navigation task includes: localization, mapping, global path planning, and local path planning. A local planner is configured to avoid obstacles, whereas the global path planner is configured to determine the global path (route). In this example, the global path planner uses the global map of the environment as an input to generate the global path and the local planner runs continuously to update the global path in real-time to actuate the robot and avoid obstacles.

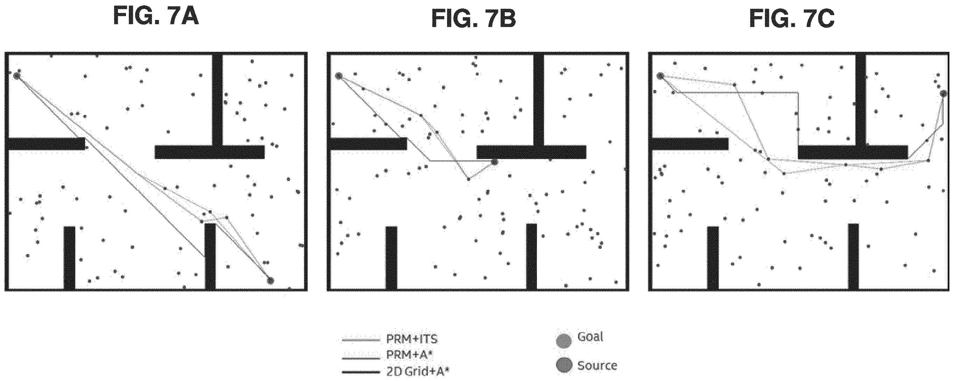

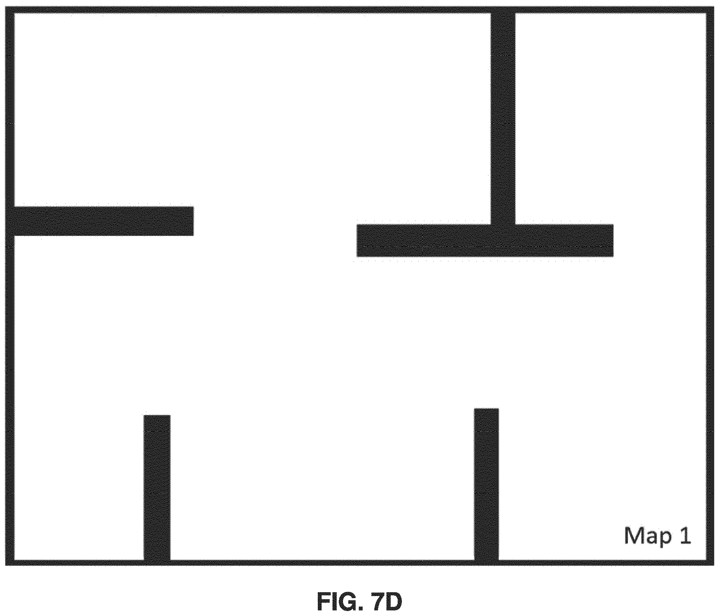

FIGS. 7A-7C illustrate comparisons in a first test case (using a first map - FIG. 7D) of paths generated according to the disclosure (e.g. PRM+ITS) versus 2D Grid + A* and PRM (Probabilistic Road Map) + A*. In these examples, a simple first map (FIG. 7D) was created with wide passages to test the time it takes to compute the path according to the disclosure as compared to the methods. As shown, the ITS algorithm provides a success rate equivalent or exceeding the A* search while providing a performance boost. These comparisons include a sample size of 100 to generate probabilistic road map with all the edges fully connected when possible. The PRM is used as the input for both PRM + A* and ITS algorithms. The input for the 2D Grid + A* is a 641x505 pixel grid map. In these examples, the k component of the cost function was omitted. The blue dot shows the location of the milestones generated by the PRM. The graph is fully connected; however, the edges are not shown to prevent obscuring the generated paths.

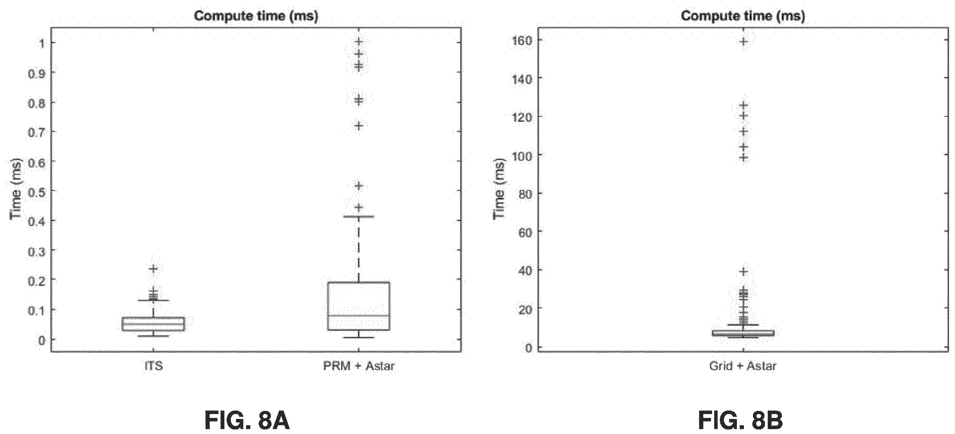

FIGS. 8A-8B are boxplots showing the computed time for the examples illustrated in FIGS. 7A-7C by running 100 different experiments. The success rate for all cases were 100%. The mean compute time and standard deviation for ITS, PRM + A*, and Grid + A* are (0.058 ms, std = 0.039), (0.167 ms, std = 0.225), (15.67 ms, std = 27.7) respectively. On average, for this scenario, ITS provided 2.8x improvement over PRM+A* and 270x improvement over Grid + A*. From the boxplot and the standard deviation, the ITS compute time seems more consistent than the other two methods

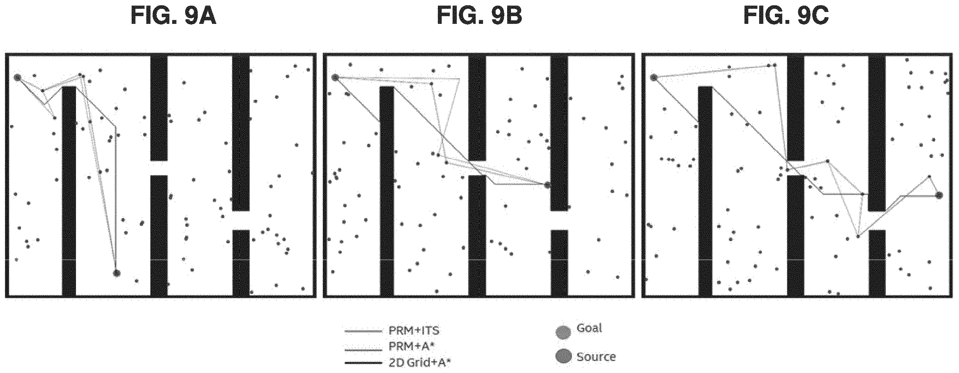

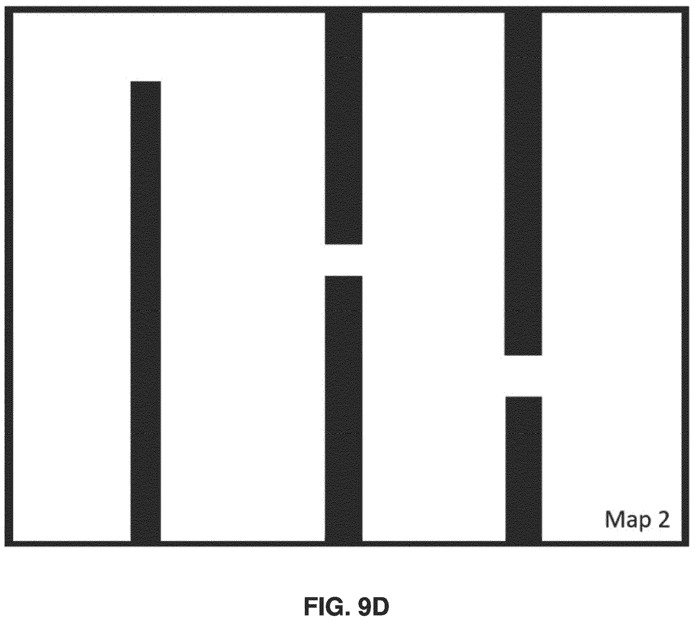

FIGS. 9A-9C illustrate comparisons in a second test case (using a second map - FIG. 9D) of paths generated according to the disclosure (e.g. PRM+ITS) versus 2D Grid + A* and PRM + A* techniques. For these examples, a second map (FIG. 9D) with multiple, narrow passages is created to determine the success rate of the ITS algorithm in difficult scenarios and the overall performance boost that it can be achieve in such scenarios. In these examples, a sample size of 100 was used to generate probabilistic road map with all the edges fully connected when possible. The PRM is used as the input for both PRM + A* and ITS algorithms. The input for the 2D Grid + A* is a 641x505 pixel grid map. The *k* component of the cost function was enabled.

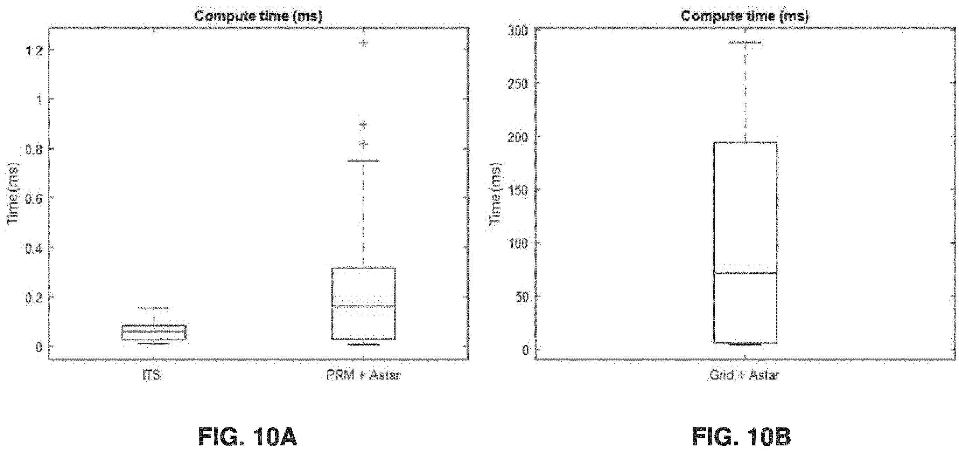

FIGS. 10A-10B are boxplots showing the computed time for the examples illustrated in FIGS. 9A-9C by running 100 different experiments. The success rate for ITS, PRM + A* and Grid + A* are: 97%, 98%, and 100% respectively. The mean compute time and standard deviation for ITS, PRM + A*, and Grid + A* are (0.059 ms, std = 0.037), (0.221 ms, std = 0.238), and (99.3 ms, std = 93.1) respectively. On average, for this scenario, ITS provided 3.74x improvement over PRM + A* and 1600x improvement over 2D Grid + A*.

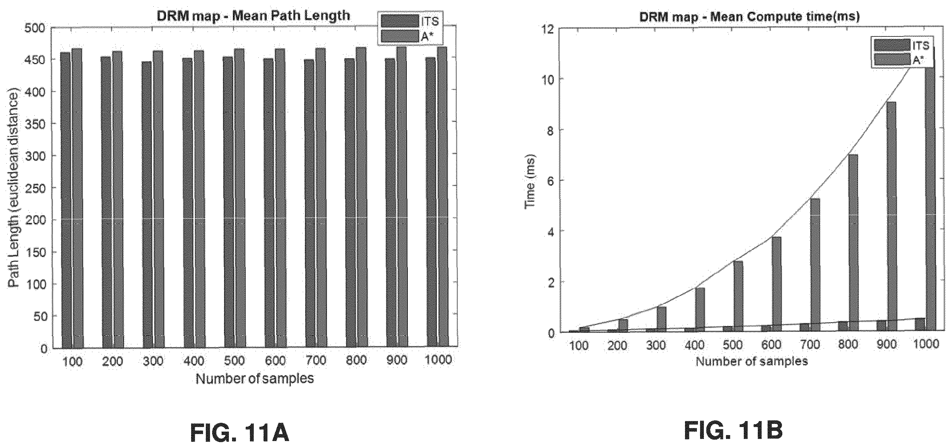

FIGS. 11A-11B illustrate plots for the first test case where 10 simulations were run on a deterministic roadmap based on the map for the first test case. Each experiment consists of 100 different plans. For each plan, the goal location is randomly chosen. The graph was generated based on deterministic roadmap. FIGS. 11A-11B show the mean path length and mean compute time for each experiment. As we increased the number of samples, ITS significantly outperformed A* in compute time. In this test case, ITS provided slightly shorter path length comparing with A*, however, the difference is negligible.

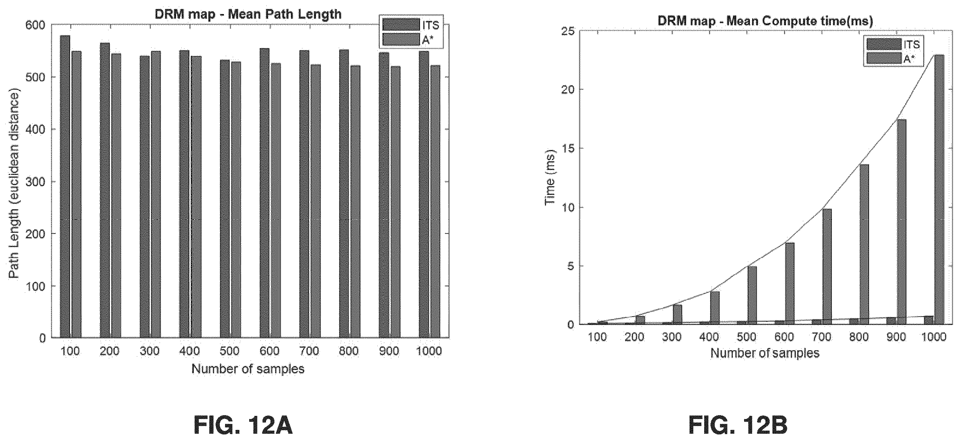

FIGS. 12A-12B illustrate plots for the second test case where 10 simulations were run. Each experiment contains 100 different plans. For each plan, the goal location is randomly chosen. The graph was generated based on deterministic roadmap. The mean path length and mean compute time for each experiment are shown. As the number of samples were increased, ITS significantly outperformed A* in compute time. In this test case, A* provided slightly shorter path length comparing with ITS, however, the difference is negligible.

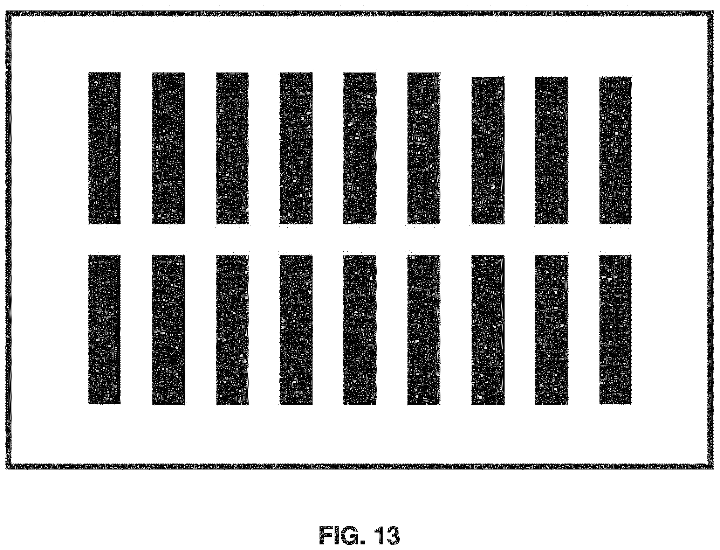

FIG. 13 illustrates a map corresponds to an example of shelves within a warehouse. In a third test case, the performance ITS was evaluated following the intelligent sampling of Equation 1. The variables for Equation 1 for the third test case were as follows:

$W$ = 1004, the width of the map
$H$ = 653, the height of the map
$w$ = 32, user defined window width
$h$ = 32, user defined window height
$n$ = 2, user defined number of desired samples per user defined area
$k$ = 0.31 (occupied area / W*H)

Based on Equation 1, the number of resulting samples $S$ was 397 points.

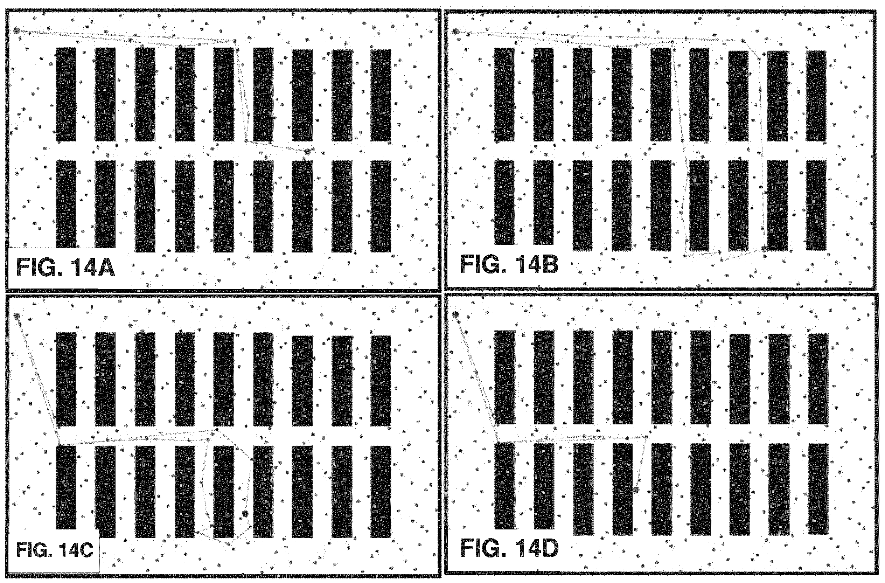

FIGS. 14A-14D illustrate simulations where ITS and A* techniques were executed on a deterministic roadmap with 397 points. Blue dot represents the roadmap milestones, the red dot is the source, and the green dot is the destination. The path found by ITS is shown in green, and the path found by A* is shown in red. From these figures, it is illustrated that the ITS path quality similar or exceeds that of the A* path. In some cases where a direct link connection is possible, the ITS path quality exceeded that of A* as shown in 14B.

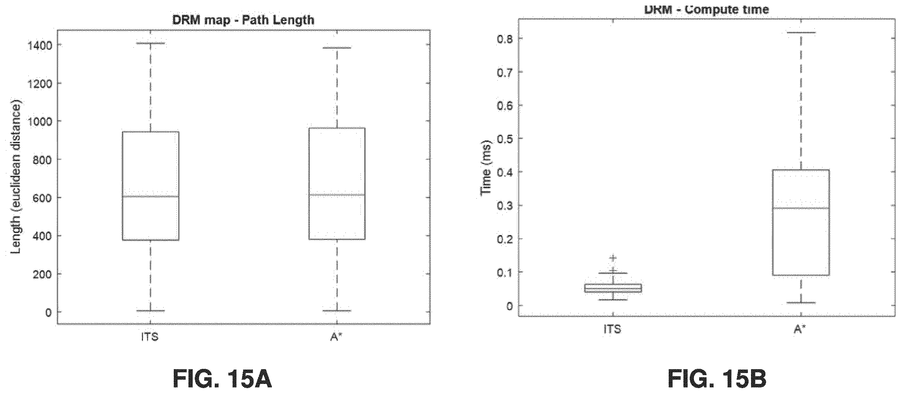

FIGS. 15A-15B are boxplots for a third test case. In this case, the experiment was run 100 times on a deterministic roadmap. These figures show the box plot for the path length and compute time for the third test case. The graph was generated based on deterministic roadmap. ITS mean compute time is significantly lower than A*, however, there is no significant difference in path length.

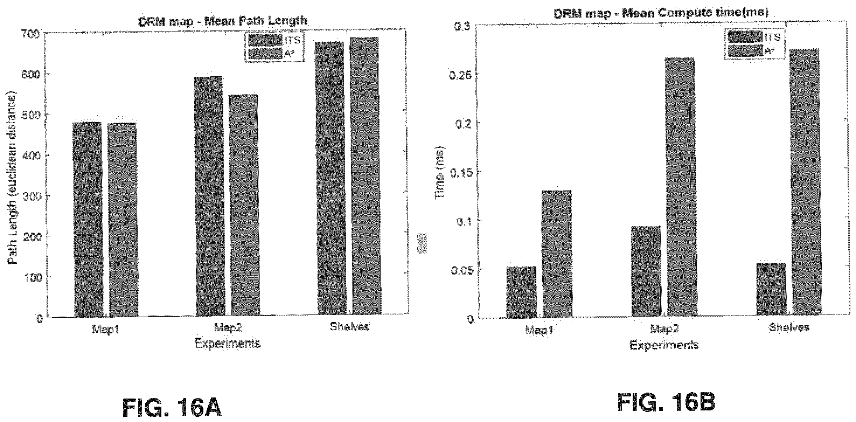

FIGS. 16A-16B show plots of the mean compute time and path length for the first map, the second map, and the shelves map of FIG. 13. Intelligent sampling of the ITS algorithm computed 69, 114, and 397 samples respectively for the first map, the second map, and the shelves map of FIG. 13. The compute time of ITS is significantly lower than A*. There is no significant difference for path length.

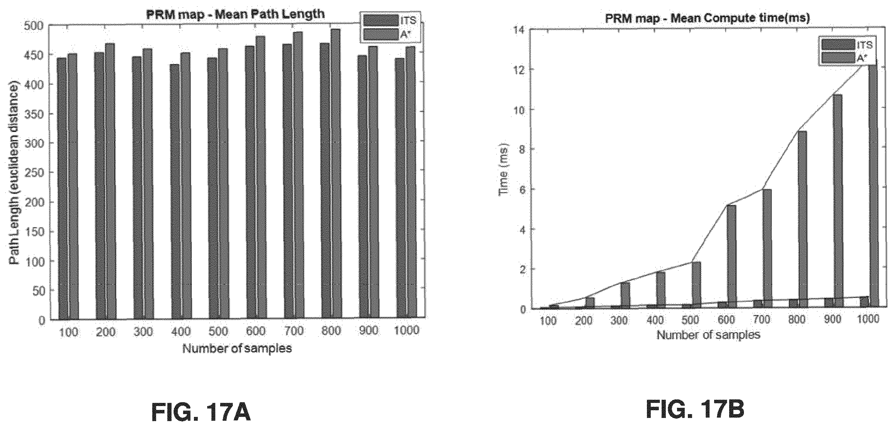

FIGS. 17A-20B illustrate data for probabilistic test cases. For example, the first test case, the second test cases, ITS algorithm were run on a probabilistic roadmap and compared the ITS with A*.

FIGS. 17A-17B show a first PRM test case (based on the first map of FIG. 7D), where 10 different experiments were ran. Each experiment contains 100 different plans. For each plan, the goal location is randomly chosen. The graph was generated based on probabilistic approach. The plot shows the mean path length and mean compute time for each experiment. As we increased the number of samples, ITS significantly outperformed A* in compute time. In this test case, ITS provided slightly shorter path length comparing with A*, however, the difference is negligible.

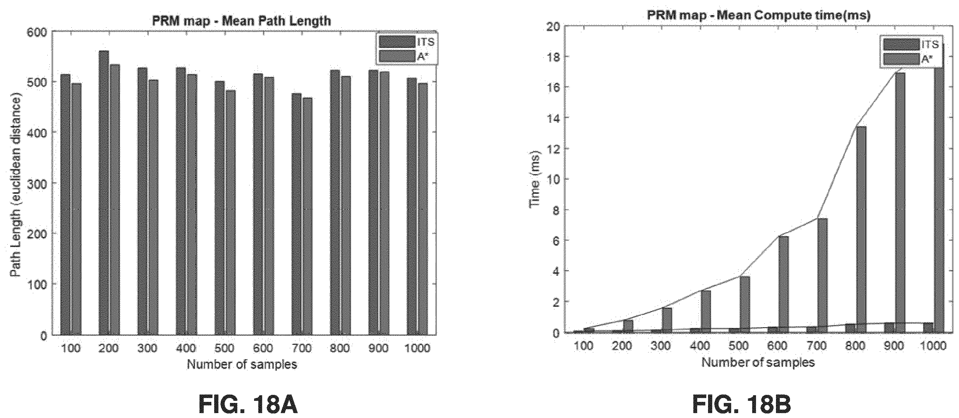

FIGS. 18A-18B show a second PRM test case (based on the second map of FIG. 9D) where 10 different experiments were ran. Each experiment contains 100 different plans. For each plan, the goal location is randomly chosen. The graph was generated based on probabilistic approach. The plot shows the mean path length and mean compute time for each experiment. As we increased the number of samples, ITS significantly outperformed A* in compute time. In this test case, A* provided slightly shorter path length comparing with ITS, however, the difference is negligible.

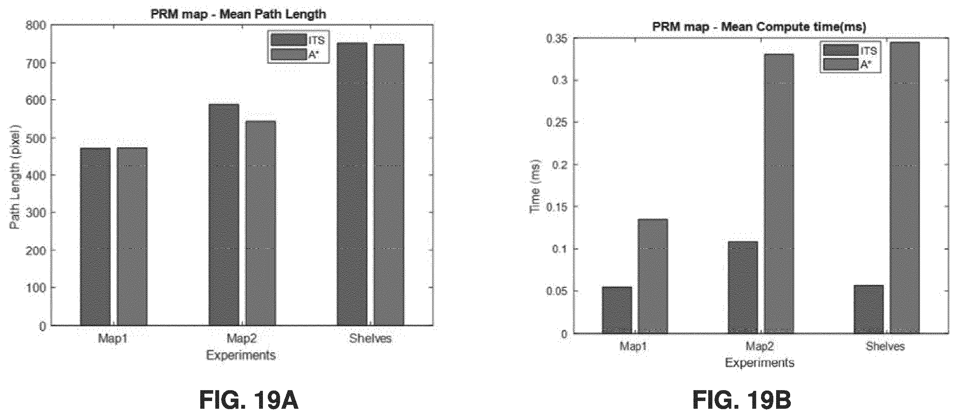

Figure 19A-19B show the mean compute time and path length for Probabilistic Road Map (PRM) and Intelligent Sampling of Equation 1 (PRM +ITS). In these examples, intelligent sampling computed 69, 114, and 397 samples respectively for the first map (FIG. 7D), the second map (FIG. 9D), and the shelving map of FIG. 13. The compute time of ITS is significantly lower than A*. There is no significant difference for path length.

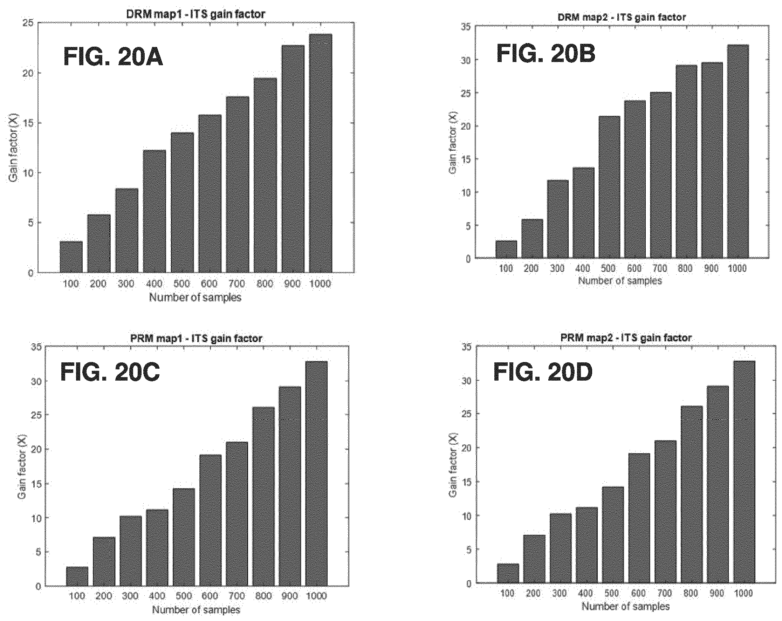

FIGS. 20A-20D show the gain factor that is achieved by ITS method over A* in both DRM and PRM maps running the experiments of the first and second test cases.

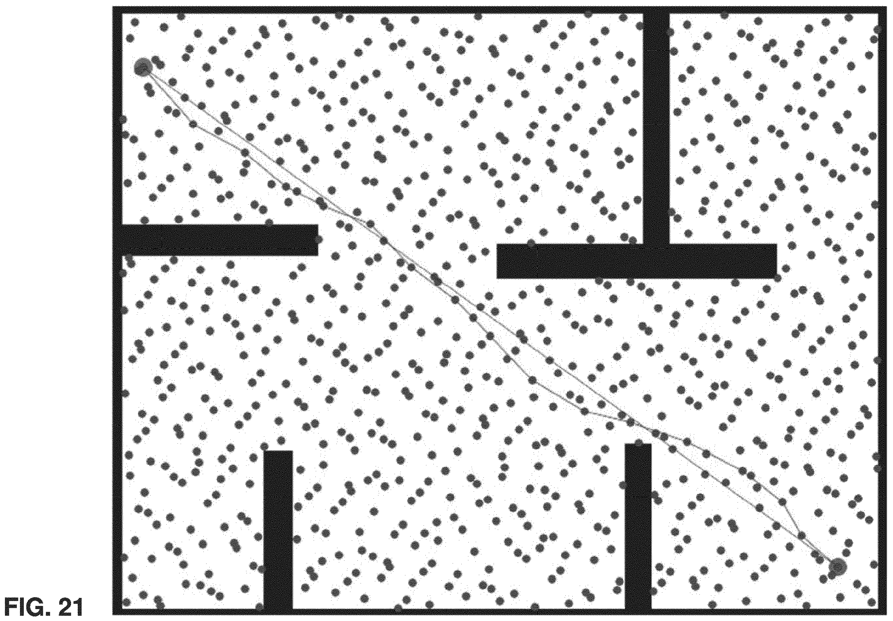

FIG. 21 shows a roadmap that was constructed with 1000 nodes. The nodes are not fully connected and there is an edge between each node and its nearest 25 neighbors. Blue dot represents the roadmap milestones, red dot is the source, and the green dot is the destination. The path found by ITS is shown in green while the path found by A* is shown in red. There is no direct edge between the source and the goal node. In this experiment ITS provided shorter and better-quality path over A* with gain factor of 6x in terms of compute time.

In this direct link test case, to demonstrate the advantage of the ITS algorithm in cases where the source and goal nodes can be linked together physically even if there is no roadmap connections between the source and goal, a deterministic roadmap is constructed for the first map with 1000 nodes and 25 connections along each node. The respective paths found by both ITS and A* are shown. The experiment was repeated the experiment for 100 times. The mean compute time for ITS is 0.0696ms, whereas the mean compute time for A* is 0.4276ms. In this experiment ITS gain factor is 6X. Also, in such scenarios ITS provides a more direct and smoother path than A*.

Examples

The following examples pertain to various techniques of the present disclosure.

An example (e.g. example 1) relates to an apparatus, such as an autonomous agent, comprising: memory storing a path planning algorithm; and a processor configured to execute the path planning algorithm to determine a path between a source node and a destination node, wherein the path planning algorithm includes: determining (e.g. parallelly) a neighboring node of the source node and a neighboring node of the destination node; setting the neighboring node of the source node as an updated source node and setting the neighboring node of the destination node as an updated destination node; determining whether an unobstructed direct path exists between the updated source node and the updated destination node; and constructing the path between the source node and the destination node based on the determination of the unobstructed direct path.

Another example (e.g. example 2) relates to a previously-described example (e.g. example 1), wherein the processor is configured to determine the neighboring node of the source node and the neighboring node of the destination node based on a respective cost function.

Another example (e.g. example 3) relates to a previously-described example (e.g. example 2), wherein the cost function is: $F = g + h$, wherein, for the cost function for determining the neighboring node of the source node: $F$ is a cost for the neighboring node of the source node, $g$ is an Euclidean distance from the source node to the neighboring node of the source node, and $h$ is an Euclidean distance from the destination node to the neighboring node of the source node; and wherein, for the cost function for determining the neighboring node of the destination node: $F$ is a cost for the neighboring node of the destination node, $g$ is an Euclidean distance from the destination node to the neighboring node of the destination node, and h is an Euclidean distance from the source node to the neighboring node of the destination node.

Another example (e.g. example 4) relates to a previously-described example (e.g. example 3), wherein the cost function further includes $k$, such that the cost function is: $F = g + h + k$, wherein, for the cost function for determining the neighboring node of the source node: $k$ is an Euclidean distance from the neighboring node of the source node to a destination location; and wherein, for the cost function for determining the neighboring node of the destination node: $k$ is an Euclidean distance from the neighboring node of the destination node to a source location.

Another example (e.g. example 5) relates to a previously-described example (e.g. one or more of examples 1-4), wherein the path is constructed between the source node and the destination node in response to a determination that: a direct path exists between the source node and destination node; the source node and the destination node meet; the updated source node crosses the updated destination node or the updated destination node crosses the updated source; and/or the updated destination node reaches the source node or the updated source node reaches the destination node.

Another example (e.g. example 6) relates to a previously-described example (e.g. one or more of examples 1-5, wherein the processor is configured to iteratively perform the path planning algorithm until the path is constructed between the source node and the destination node.

Another example (e.g. example 7) relates to a previously-described example (e.g. example 6), wherein the path planning algorithm is iteratively performed until an occurrence of: a direct path exists between the source node and destination node; the source node and the destination node meet; the updated source node crosses the updated destination node or the updated destination node crosses the updated source; and/or the updated destination node reaches the source node or the updated source node reaches the destination node.

Another example (e.g. example 8) relates to a previously-described example (e.g. one or more of examples 1-7), wherein the apparatus (e.g. autonomous agent) is configured to navigate a roadmap defining an environment using the path planning method, the processor being further configured to determine a number of samples to be included in the roadmap based on an occupancy ratio of the environment.

Another example (e.g. example 9) relates to a previously-described example (e.g. example 8), wherein the processor is configured to determine the number of samples to be included in the roadmap based further on a sample resolution value.

Another example (e.g. example 10) relates to a previously-described example (e.g. one or more of examples 8-9), wherein the processor is configured to adjust the occupancy ratio, during performance of the path planning algorithm, based on occupancy information.

Another example (e.g. example 11) relates to a previously-described example (e.g. one or more of examples 1-7), wherein the apparatus (e.g. autonomous agent) is configured to navigate a roadmap defining an environment using the path planning method, the processor being further configured to determine a number of samples to be included in the roadmap based on the following equation:

$$S = \frac{W * H}{w * h} * n * k$$

wherein $S$ is the number samples, $W$ is a map width, $H$ is a map height, $w$ is a user-defined window width, $h$ is a user-defined window height, $k$ is an occupancy ratio of the map, and $n$ is sample resolution value.

Another example (e.g. example 12) relates to a previously-described example (e.g. example 11), wherein the processor is configured to adjust, during performance of the path planning algorithm: $k$ based on occupancy information; and/or $n$ based on a current time, a current date, and/or a current distance of the apparatus (e.g. autonomous agent) to the destination node.

Another example (e.g. example 13) relates to a previously-described example (e.g. example 12), wherein the occupancy information is generated based on sensor data from one or more sensors of the apparatus (e.g. autonomous agent) and/or from one or more external sensor.

Another example (e.g. example 14) relates to a previously-described example (e.g. one or more of examples 1-13), wherein the neighboring node of the source node and the neighboring node of the destination node are determined simultaneously.

Another example (e.g. example 15) relates to an apparatus, such as an autonomous agent, comprising: memory means for storing a path planning algorithm; and processing means for executing the path planning algorithm to determine a path between a source node and a destination node, wherein the path planning algorithm includes: determining (e.g. parallelly) a neighboring node of the source node and a neighboring node of the destination node; setting the neighboring node of the source node as an updated source node and setting the neighboring node of the destination node as an updated destination node; determining whether an unobstructed direct path exists between the updated source node and the updated destination node; and constructing the path between the source node and the destination node based on the determination of the unobstructed direct path.

Another example (e.g. example 16) relates to a previously-described example (e.g. example 15), wherein the processing means is configured to determine the neighboring node of the source node and the neighboring node of the destination node based on a respective cost function.

Another example (e.g. example 17) relates to a previously-described example (e.g. example 16), wherein the cost function is: $F = g + h$, wherein, for the cost function for determining the neighboring node of the source node: $F$ is a cost for the neighboring node of the source node, $g$ is an Euclidean distance from the source node to the neighboring node of the source node, and $h$ is an Euclidean distance from the destination node to the neighboring node of the source node; and wherein, for the cost function for determining the neighboring node of the destination node: $F$ is a cost for the neighboring node of the destination node, $g$ is an Euclidean distance from the destination node to the neighboring node of the destination node, and $h$ is an Euclidean distance from the source node to the neighboring node of the destination node.

Another example (e.g. example 18) relates to a previously-described example (e.g. example 17), wherein the cost function further includes $k$, such that the cost function is: $F = g + h + k$, wherein, for the cost function for determining the neighboring node of the source node: $k$ is an Euclidean distance from the neighboring node of the source node to a destination location; and wherein, for the cost function for determining the neighboring node of the destination node: $k$ is an Euclidean distance from the neighboring node of the destination node to a source location.

Another example (e.g. example 19) relates to a previously-described example (e.g. one or more of examples 15-18), wherein the path is constructed between the source node and the destination node in response to a determination that: a direct path exists between the source node and destination node; the source node and the destination node meet; the updated source node crosses the updated destination node or the updated destination node crosses the updated source; and/or the updated destination node reaches the source node or the updated source node reaches the destination node.

Another example (e.g. example 20) relates to a previously-described example (e.g. one or more of examples 15-19), wherein the processing means is configured to iteratively perform the path planning algorithm until the path is constructed between the source node and the destination node.

Another example (e.g. example 21) relates to a previously-described example (e.g. example 20), wherein the path planning algorithm is iteratively performed until an occurrence of: a direct path exists between the source node and destination node; the source node and the destination node meet; the updated source node crosses the updated destination node or the updated destination node crosses the updated source; and/or the updated destination node reaches the source node or the updated source node reaches the destination node.

Another example (e.g. example 22) relates to a previously-described example (e.g. one or more of examples 15-21), wherein the apparatus (e.g. autonomous agent) is configured to navigate a roadmap defining an environment using the path planning method, the processing means being further configured to determine a number of samples to be included in the roadmap based on an occupancy ratio of the environment.

Another example (e.g. example 23) relates to a previously-described example (e.g. example 22), wherein the processing means is configured to determine the number of samples to be included in the roadmap based further on a sample resolution value.

Another example (e.g. example 24) relates to a previously-described example (e.g. one or more of examples 22-23), wherein the processing means is configured to adjust the occupancy ratio, during performance of the path planning algorithm, based on occupancy information.

Another example (e.g. example 25) relates to a previously-described example (e.g. one or more of examples 15-21), wherein the apparatus (e.g. autonomous agent) is configured to navigate a roadmap defining an environment using the path planning method, the processing means being further configured to determine a number of samples to be included in the roadmap based on the following equation:

$$S = \frac{W * H}{w * h} * n * k$$

wherein $S$ is the number samples, $W$ is a map width, $H$ is a map height, w is a user-defined window width, $h$ is a user-defined window height, $k$ is an occupancy ratio of the map, and $n$ is sample resolution value.

Another example (e.g. example 26) relates to a previously-described example (e.g. example 25), wherein the processing means is configured to adjust, during performance of the path planning algorithm: $k$ based on occupancy information; and/or $n$ based on a current time, a current date, and/or a current distance of the apparatus (e.g. autonomous agent) to the destination node.

Another example (e.g. example 27) relates to a previously-described example (e.g. example 26), wherein the occupancy information is generated based on sensor data from one or more sensors of the apparatus (e.g. autonomous agent) and/or from one or more external sensing means.

Another example (e.g. example 28) relates to a previously-described example (e.g. one or more of examples 15-27), wherein the neighboring node of the source node and the neighboring node of the destination node are determined simultaneously.

Another example (e.g. example 29) relates to a path planning method (e.g. for an autonomous agent), comprising: determining (e.g. parallelly) a neighboring node of a source node and a neighboring node of a destination node; setting the neighboring node of the source node as an updated source node and setting the neighboring node of the destination node as an updated destination node; determining if an unobstructed direct path exists between the updated source node and the updated destination node; and constructing a path between the source node and the destination node based on the determination of the unobstructed direct path.

Another example (e.g. example 30) relates to a previously-described example (e.g. example 29), further comprising determining the neighboring node of the source node and the neighboring node of the destination node based on a respective cost function.

Another example (e.g. example 31) relates to a previously-described example (e.g. example 30), wherein the cost function is: $F = g + h,$ wherein, for the cost function for determining the neighboring node of the source node: F is a cost for the neighboring node of the source node, $g$ is an Euclidean distance from the source node to the neighboring node of the source node, and $h$ is an Euclidean distance from the destination node to the neighboring node of the source node; and wherein, for the cost function for determining the neighboring node of the destination node: $F$ is a cost for the neighboring node of the destination node, $g$ is an Euclidean distance from the destination node to the neighboring node of the destination node, and $h$ is an Euclidean distance from the source node to the neighboring node of the destination node.

Another example (e.g. example 32) relates to a previously-described example (e.g. example 31), wherein the cost function further includes $k$, such that the cost function is: $F = g + h + k$, wherein, for the cost function for determining the neighboring node of the source node: $k$ is an Euclidean distance from the neighboring node of the source node to a destination location; and wherein, for the cost function for determining the neighboring node of the destination node: $k$ is an Euclidean distance from the neighboring node of the destination node to a source location.

Another example (e.g. example 33) relates to a previously-described example (e.g. one or more of examples 29-32), wherein the path is constructed between the source node and the destination node in response to a determination that: a direct path exists between the source node and destination node; the source node and the destination node meet; the updated source node crosses the updated destination node or the updated destination node crosses the updated source; and/or the updated destination node reaches the source node or the updated source node reaches the destination node.

Another example (e.g. example 34) relates to a previously-described example (e.g. one or more of examples 29-33), wherein the method is iteratively performed until the path is constructed between the source node and the destination node.

Another example (e.g. example 35) relates to a previously-described example (e.g. example 34), wherein the method is iteratively performed until an occurrence of: a direct path exists between the source node and destination node; the source node and the destination node meet; the updated source node crosses the updated destination node or the updated destination node crosses the updated source; and/or the updated destination node reaches the source node or the updated source node reaches the destination node.

Another example (e.g. example 36) relates to a previously-described example (e.g. one or more of examples 29-35), wherein an autonomous agent is configured to navigate a roadmap defining an environment using the path planning method, the method further comprising determining a number of samples to be included in the roadmap based on an occupancy ratio of the environment.

Another example (e.g. example 37) relates to a previously-described example (e.g. example36), further comprising determining the number of samples to be included in the roadmap based further on a sample resolution value.

Another example (e.g. example 38) relates to a previously-described example (e.g. one or more of examples 36-37), further comprising adjusting the occupancy ratio based on occupancy information.

Another example (e.g. example 39) relates to a previously-described example (e.g. one or more of examples 29-35), wherein an autonomous agent is configured to navigate a roadmap defining an environment, the method further comprising determining a number of samples to be included in the roadmap based on the following equation:

$$S = \frac{W * H}{w * h} * n * k$$

wherein $S$ is the number samples, $W$ is a map width, $H$ is a map height, $w$ is a user-defined window width, $h$ is a user-defined window height, $k$ is an occupancy ratio of the map, and $n$ is sample resolution value.

Another example (e.g. example 40) relates to a previously-described example (e.g. example 39), further comprising adjusting: $k$ based on occupancy information; and/or $n$ based on a current time, a current date, and/or a current distance of the autonomous agent to the destination node.

Another example (e.g. example 41) relates to a previously-described example (e.g. example 40), wherein the occupancy information is generated based on sensor data from one or more sensors of the autonomous agent and/or from one or more external sensor.

Another example (e.g. example 42) relates to a previously-described example (e.g. one or more of examples 29-41), wherein the neighboring node of the source node and the neighboring node of the destination node are determined simultaneously.

Another example (e.g. example 43) relates to a computer-readable storage medium with an executable program stored thereon, that when executed, instructs a processor to perform the method of one or more examples (e.g. one or more examples 29-42).

Another example (e.g. example 44) relates to a computer program product comprising instructions which, when executed by a processor, cause the processor to perform the method of one or more examples (e.g. one or more examples 29-42).

Another example (e.g. example 45) relates to an apparatus comprising means to perform the method of one or more examples (e.g. one or more examples 29-42).

Another example (e.g. example 46) relates to a computer-readable storage medium with an executable program stored thereon, that when executed, instructs a processor to: determine (e.g. parallelly) a neighboring node of a source node and a neighboring node of a destination node; set the neighboring node of the source node as an updated source node and setting the neighboring node of the destination node as an updated destination node; determine if an unobstructed direct path exists between the updated source node and the updated destination node; and construct a path between the source node and the destination node based on the determination of the unobstructed direct path.

Another example (e.g. example 47) relates to a previously-described example (e.g. example 46), further comprising determining the neighboring node of the source node and the neighboring node of the destination node based on a respective cost function.

Another example (e.g. example 48) relates to a previously-described example (e.g. example 47), wherein the cost function is: $F = g + h$, wherein, for the cost function for determining the neighboring node of the source node: $F$ is a cost for the neighboring node of the source node, $g$ is an Euclidean distance from the source node to the neighboring node of the source node, and $h$ is an Euclidean distance from the destination node to the neighboring node of the source node; and wherein, for the cost function for determining the neighboring node of the destination node: $F$ is a cost for the neighboring node of the destination node, $g$ is an Euclidean distance from the destination node to the neighboring node of the destination node, and $h$ is an Euclidean distance from the source node to the neighboring node of the destination node.

Another example (e.g. example 49) relates to a previously-described example (e.g. example 48), wherein the cost function further includes $k$, such that the cost function is: $F = g + h + k$, wherein, for the cost function for determining the neighboring node of the source node: $k$ is an Euclidean distance from the neighboring node of the source node to a destination location; and wherein, for the cost function for determining the neighboring node of the destination node: $k$ is an Euclidean distance from the neighboring node of the destination node to a source location.

Another example (e.g. example 50) relates to a previously-described example (e.g. one or more of examples 46-49), wherein the path is constructed between the source node and the destination node in response to a determination that: a direct path exists between the source node and destination node; the source node and the destination node meet; the updated source node crosses the updated destination node or the updated destination node crosses the updated source; and/or the updated destination node reaches the source node or the updated source node reaches the destination node.

Another example (e.g. example 51) relates to a previously-described example (e.g. one or more of examples 46-50), wherein the processor iteratively performs the operations until the path is constructed between the source node and the destination node.

Another example (e.g. example 52) relates to a previously-described example (e.g. examples 51), wherein the processor iteratively performs the operations until an occurrence of: a direct path exists between the source node and destination node; the source node and the destination node meet; the updated source node crosses the updated destination node or the updated destination node crosses the updated source; and/or the updated destination node reaches the source node or the updated source node reaches the destination node.

Another example (e.g. example 53) relates to a previously-described example (e.g. one or more of examples 46-52), wherein an autonomous agent is configured to navigate a roadmap defining an environment, the processor being further configured to determine a number of samples to be included in the roadmap based on an occupancy ratio of the environment.

Another example (e.g. example 54) relates to a previously-described example (e.g. example 53), wherein the processor is configured to determine the number of samples to be included in the roadmap based further on a sample resolution value.

Another example (e.g. example 55) relates to a previously-described example (e.g. one or more of examples 53-54), wherein the processor is configured to adjust the occupancy ratio based on occupancy information.

Another example (e.g. example 56) relates to a previously-described example (e.g. one or more of examples 46-52), wherein the autonomous agent is configured to navigate a roadmap defining an environment, the processor being further configured to determine a number of samples to be included in the roadmap based on the following equation:

$$S = \frac{W * H}{w * h} * n * k$$

wherein $S$ is the number samples, $W$ is a map width, $H$ is a map height, $w$ is a user-defined window width, $h$ is a user-defined window height, $k$ is an occupancy ratio of the map, and $n$ is sample resolution value.

Another example (e.g. example 57) relates to a previously-described example (e.g. example 56), further comprising adjusting: $k$ based on occupancy information; and/or $n$ based on a current time, a current date, and/or a current distance of the autonomous agent to the destination node.

Another example (e.g. example 58) relates to a previously-described example (e.g. example 57), wherein the occupancy information is generated based on sensor data from one or more sensors of the autonomous agent and/or from one or more external sensor.

Another example (e.g. example 59) relates to a previously-described example (e.g. one or more of examples 46-58), wherein the neighboring node of the source node and the neighboring node of the destination node are determined simultaneously.

Another example (e.g. example 60) relates to a previously-described example (e.g. one or more of examples 46-59), wherein the autonomous agent is an autonomous mobile robot.

Another example (e.g. example 61) relates to a previously-described example (e.g. one or more of examples 46-60), wherein the autonomous agent is an autonomous vehicle.

Another example (e.g. example 62) relates to a controller, comprising: sampling means for adaptive sampling to generate a roadmap; and path planning means for: determining (e.g. parallelly) a neighboring node of a source node and a neighboring node of a destination node; setting the neighboring node of the source node as an updated source node and setting the neighboring node of the destination node as an updated destination node; determining whether an unobstructed direct path exists between the updated source node and the updated destination node; and constructing a path within the roadmap between the source node and the destination node based on the determination of the unobstructed direct path.

Another example (e.g. example 63) relates to a previously-described example (e.g. example 62), wherein the path planning means is configured to determine the neighboring node of the source node and the neighboring node of the destination node based on a respective cost function.

Another example (e.g. example 64) relates to a previously-described example (e.g. example 63), wherein the cost function is: $F = g + h$, wherein, for the cost function for determining the neighboring node of the source node: $F$ is a cost for the neighboring node of the source node, $g$ is an Euclidean distance from the source node to the neighboring node of the source node, and $h$ is an Euclidean distance from the destination node to the neighboring node of the source node; and wherein, for the cost function for determining the neighboring node of the destination node: $F$ is a cost for the neighboring node of the destination node, $g$ is an Euclidean distance from the destination node to the neighboring node of the destination node, and $h$ is an Euclidean distance from the source node to the neighboring node of the destination node.

Another example (e.g. example 65) relates to a previously-described example (e.g. example 64), wherein the cost function further includes k, such that the cost function is: $F = g + h + k$, wherein, for the cost function for determining the neighboring node of the source node: $k$ is an Euclidean distance from the neighboring node of the source node to a destination location; and wherein, for the cost function for determining the neighboring node of the destination node: $k$ is an Euclidean distance from the neighboring node of the destination node to a source location.

Another example (e.g. example 66) relates to a previously-described example (e.g. one or more of examples 62-65), wherein the path is constructed between the source node and the destination node in response to a determination that: a direct path exists between the source node and destination node; the source node and the destination node meet; the updated source node crosses the updated destination node or the updated destination node crosses the updated source; and/or the updated destination node reaches the source node or the updated source node reaches the destination node.

Another example (e.g. example 67) relates to a previously-described example (e.g. one or more of examples 62-66), wherein the path planning means is configured to iteratively perform the determining of the neighboring nodes, the setting of the neighboring nodes, and the determining whether the unobstructed direct path exists until the path is constructed between the source node and the destination node.

Another example (e.g. example 67) relates to a previously-described example (e.g. example 67), wherein the iterative performance by the path planning means is performed until an occurrence of: a direct path exists between the source node and destination node; the source node and the destination node meet; the updated source node crosses the updated destination node or the updated destination node crosses the updated source; and/or the updated destination node reaches the source node or the updated source node reaches the destination node.

Another example (e.g. example 69) relates to a previously-described example (e.g. one or more of examples 62-68), wherein the sampling means is configured to determine a number of samples to be included in the roadmap based on an occupancy ratio of the environment.

Another example (e.g. example 70) relates to a previously-described example (e.g. example 69), wherein the sampling means is configured to determine the number of samples to be included in the roadmap based further on a sample resolution value.

Another example (e.g. example 71) relates to a previously-described example (e.g. one or more of examples 69-70), wherein the sampling means is configured to adjust the occupancy ratio based on occupancy information.

Another example (e.g. example 72) relates to a previously-described example (e.g. one or more of examples 62-68), the sampling means is further configured to determine a number of samples to be included in the roadmap based on the following equation:

$$ S = \frac{W * H}{w * h} * n * k $$

wherein $S$ is the number samples, $W$ is a map width, $H$ is a map height, $w$ is a user-defined window width, $h$ is a user-defined window height, $k$ is an occupancy ratio of the map, and $n$ is sample resolution value.

Another example (e.g. example 73) relates to a previously-described example (e.g. example 72), wherein the sampling means is configured to adjust: $k$ based on occupancy information; and/or $n$ based on a current time, a current date, and/or a current distance to the destination node.

Another example (e.g. example 74) relates to a previously-described example (e.g. example 73), wherein the occupancy information is generated based on sensor data from one or more sensors of an autonomous agent and/or from one or more external sensing means.

Another example (e.g. example 75) relates to a previously-described example (e.g. one or more of examples 62-74), wherein the neighboring node of the source node and the neighboring node of the destination node are determined simultaneously.

Another example (e.g. example 76) relates to a controller, comprising: a sampler configured to adaptively sample an environment to generate a roadmap; and a path planner configured to: determining (e.g. parallelly) a neighboring node of a source node and a neighboring node of a destination node; setting the neighboring node of the source node as an updated source node and setting the neighboring node of the destination node as an updated destination node; determining whether an unobstructed direct path exists between the updated source node and the updated destination node; and constructing a path within the roadmap between the source node and the destination node based on the determination of the unobstructed direct path.

Another example (e.g. example 77) relates to a previously-described example (e.g. example 76), wherein the path planner is configured to determine the neighboring node of the source node and the neighboring node of the destination node based on a respective cost function.

Another example (e.g. example 78) relates to a previously-described example (e.g. example 77), wherein the cost function is: $F = g + h$, wherein, for the cost function for determining the neighboring node of the source node: $F$ is a cost for the neighboring node of the source node, $g$ is an Euclidean distance from the source node to the neighboring node of the source node, and $h$ is an Euclidean distance from the destination node to the neighboring node of the source node; and wherein, for the cost function for determining the neighboring node of the destination node: $F$ is a cost for the neighboring node of the destination node, $g$ is an Euclidean distance from the destination node to the neighboring node of the destination node, and h is an Euclidean distance from the source node to the neighboring node of the destination node.

Another example (e.g. example 79) relates to a previously-described example (e.g. example 78), wherein the cost function further includes $k$, such that the cost function is: $F = g + h + k$, wherein, for the cost function for determining the neighboring node of the source node: $k$ is an Euclidean distance from the neighboring node of the source node to a destination location; and wherein, for the cost function for determining the neighboring node of the destination node: k is an Euclidean distance from the neighboring node of the destination node to a source location.

Another example (e.g. example 80) relates to a previously-described example (e.g. one or more of examples 76-79), wherein the path is constructed between the source node and the destination node in response to a determination that: a direct path exists between the source node and destination node; the source node and the destination node meet; the updated source node crosses the updated destination node or the updated destination node crosses the updated source; and/or the updated destination node reaches the source node or the updated source node reaches the destination node.

Another example (e.g. example 81) relates to a previously-described example (e.g. one or more of examples 76-80), wherein the path planner is configured to iteratively perform the determining of the neighboring nodes, the setting of the neighboring nodes, and the determining whether the unobstructed direct path exists until the path is constructed between the source node and the destination node.

Another example (e.g. example 82) relates to a previously-described example (e.g. example 81), wherein the iterative performance by the path planner is performed until an occurrence of: a direct path exists between the source node and destination node; the source node and the destination node meet; the updated source node crosses the updated destination node or the updated destination node crosses the updated source; and/or the updated destination node reaches the source node or the updated source node reaches the destination node.

Another example (e.g. example 83) relates to a previously-described example (e.g. one or more of examples 46-50), 83. The controller of any of claims 76-82, wherein the sampler is configured to determine a number of samples to be included in the roadmap based on an occupancy ratio of the environment.

Another example (e.g. example 84) relates to a previously-described example (e.g. example 83), wherein the sampler is configured to determine the number of samples to be included in the roadmap based further on a sample resolution value.

Another example (e.g. example 85) relates to a previously-described example (e.g. one or more of examples 83-84), wherein the sampler is configured to adjust the occupancy ratio based on occupancy information.

Another example (e.g. example 86) relates to a previously-described example (e.g. one or more of examples 76-82), the sampler is further configured to determine a number of samples to be included in the roadmap based on the following equation:

$$ S = \frac{W * H}{w * h} * n * k $$

wherein $S$ is the number samples, $W$ is a map width, $H$ is a map height, $w$ is a user-defined window width, $h$ is a user-defined window height, $k$ is an occupancy ratio of the map, and $n$ is sample resolution value.

Another example (e.g. example 87) relates to a previously-described example (e.g. example 86), wherein the sampler is configured to adjust: $k$ based on occupancy information; and/or $n$ based on a current time, a current date, and/or a current distance to the destination node.

Another example (e.g. example 88) relates to a previously-described example (e.g. example 87), wherein the occupancy information is generated based on sensor data from one or more sensors of an autonomous agent and/or from one or more external sensing means.

Another example (e.g. example 89) relates to a previously-described example (e.g. one or more of examples 76-88), wherein the neighboring node of the source node and the neighboring node of the destination node are determined simultaneously.

Another example (e.g. example 90) relates to an autonomous agent comprising the controller of any of the examples (e.g. one or more examples 62-89).

Another example (e.g. example 91) relates to an apparatus as shown and described.

Another example (e.g. example 92) relates to a method as shown and described.

Another example (e.g. example 93) relates to a computer-readable storage medium with an executable program stored thereon, that when executed, instructs a processor to perform a method as shown and described.

Another example (e.g. example 94) relates to a computer program product comprising instructions which, when executed by a processor, cause the processor to perform a method as shown and described.

Conclusion

The aforementioned description will so fully reveal the general nature of the implementation of the disclosure that others can, by applying knowledge within the skill of the art, readily modify and/or adapt for various applications such specific implementations without undue experimentation and without departing from the general concept of the present disclosure. Therefore, such adaptations and modifications are intended to be within the meaning and range of equivalents of the disclosed implementations, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

Each implementation described may include a particular feature, structure, or characteristic, but every implementation may not necessarily include the particular feature, structure, or characteristic. Moreover, such phrases are not necessarily referring to the same implementation. Further, when a particular feature, structure, or characteristic is described in connection with an implementation, it is submitted that it is within the knowledge of one skilled in the art to affect such feature, structure, or characteristic in connection with other implementations whether or not explicitly described.

The exemplary implementations described herein are provided for illustrative purposes, and are not limiting. Other implementations are possible, and modifications may be made to the exemplary implementations. Therefore, the specification is not meant to limit the disclosure. Rather, the scope of the disclosure is defined only in accordance with the following claims and their equivalents.

The designs of the disclosure may be implemented in hardware (e.g., circuits), firmware, software, or any combination thereof. Designs may also be implemented as instructions stored on a machine-readable medium, which may be read and executed by one or more processors. A machine-readable medium may include any mechanism for storing or transmitting information in a form readable by a machine (e.g., a computing device). A machine-readable medium may include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others. Further, firmware, software, routines, instructions may be described herein as performing certain actions. However, it should be appreciated that such descriptions are merely for convenience and that such actions in fact results from computing devices, processors, controllers, or other devices executing the firmware, software, routines, instructions, etc. Further, any of the implementation variations may be carried out by a general-purpose computer.

Throughout the drawings, it should be noted that like reference numbers are used to depict the same or similar elements, features, and structures, unless otherwise noted.

The terms "at least one" and "one or more" may be understood to include a numerical quantity greater than or equal to one (e.g., one, two, three, four, [...], etc.). The term "a plurality" may be understood to include a numerical quantity greater than or equal to two (e.g., two, three, four, five, [...], etc.).

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. The terms "group (of)", "set (of)", "collection (of)", "series (of)", "sequence (of)", "grouping (of)", etc., and the like in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The phrase "at least one of" with regard to a group of elements may be used herein to mean at least one element from the group consisting of the elements. The phrase "at least one of" with regard to a group of elements may be used herein to mean a selection of: one of the listed elements, a plurality of one of the listed elements, a plurality of individual listed elements, or a plurality of a multiple of individual listed elements.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned data types and may take various forms and represent any information as understood in the art.

The terms "processor," "processing circuitry," or "controller" as used herein may be understood as any kind of technological entity that allows handling of data. The data may be handled according to one or more specific functions executed by the processor, processing circuitry, or controller. Further, processing circuitry, a processor, or a controller as used herein may be understood as any kind of circuit, e.g., any kind of analog or digital circuit. Processing circuitry, a processor, or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described herein in further detail, may also be understood as processing circuitry, a processor, controller, or logic circuit. It is understood that any two (or more) of the processors, controllers, logic circuits, or processing circuitries detailed herein may be realized as a single entity with equivalent functionality or the like, and conversely that any single processor, controller, logic circuit, or processing circuitry detailed herein may be realized as two (or more) separate entities with equivalent functionality or the like.

As used herein, "memory" is understood as a computer-readable medium in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, among others, or any combination thereof. Registers, shift registers, processor registers, data buffers, among others, are also embraced herein by the term memory. The term "software" refers to any type of executable instruction, including firmware.

In one or more of the implementations described herein, processing circuitry can include memory that stores data and/or instructions. The memory can be any well-known volatile and/or non-volatile memory, including read-only memory (ROM), random access memory (RAM), flash memory, a magnetic storage media, an optical disc, erasable programmable read only memory (EPROM), and programmable read only memory (PROM). The memory can be non-removable, removable, or a combination of both.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). Processing circuitry, a processor, or a controller may transmit or receive data over a software-level connection with another processor, controller, or processing circuitry in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

An "agent" may be understood to include any type of driven object. An agent may be a driven object with a combustion engine, a reaction engine, an electrically driven object, a hybrid driven object, or a combination thereof. An agent may be or may include a moving robot, a personal transporter, a drone, and the like.

The term "autonomous agent" may describe an agent that implements all or substantially all navigational changes, at least during some (significant) part (spatial or temporal, e.g., in certain areas, or when ambient conditions are fair, or on highways, or above or below a certain speed) of some drives. Sometimes an "autonomous agent" is distinguished from a "partially autonomous agent" or a "semi-autonomous agent" to indicate that the agent is capable of implementing some (but not all) navigational changes, possibly at certain times, under certain conditions, or in certain areas. A navigational change may describe or include a change in one or more of steering, braking, or acceleration/deceleration of the agent. An agent may be described as autonomous even in case the agent is not fully automatic (fully operational with driver or without driver input). Autonomous agents may include those agents that can operate under driver control during certain time periods and without driver control during other time periods. Autonomous agents may also include agents that control only some implementations of agent navigation, such as steering (e.g., to maintain an agent course between agent lane constraints) or some steering operations under certain circumstances (but not under all circumstances), but may leave other implementations of agent navigation to the driver (e.g., braking or braking under certain circumstances). Autonomous agents may also include agents that share the control of one or more implementations of agent navigation under certain circumstances (e.g., hands-on, such as responsive to a driver input) and agents that control one or more implementations of agent navigation under certain circumstances (e.g., hands-off, such as independent of driver input). Autonomous agents may also include agents that control one or more implementations of agent navigation under certain circumstances, such as under certain environmental conditions (e.g., spatial areas, roadway conditions). In some implementations, autonomous agents may handle some or all implementations of braking, speed control, velocity control, and/or steering of the agent. An autonomous agent may include those agents that can operate without a driver. The level of autonomy of an agent may be described or determined by the Society of Automotive Engineers (SAE) level of the agent (as defined by the SAE in SAE J3016 2018: Taxonomy and definitions for terms related to driving automation systems for on road motor vehicles) or by other relevant professional organizations. The SAE level may have a value ranging from a minimum level, e.g. level 0 (illustratively, substantially no driving automation), to a maximum level, e.g. level 5 (illustratively, full driving automation).

The systems and methods of the disclosure may utilize one or more machine learning models to perform corresponding functions of the agent (or other functions described herein). The term "model" as, for example, used herein may be understood as any kind of algorithm, which provides output data from input data (e.g., any kind of algorithm generating or calculating output data from input data). A machine learning model may be executed by a computing system to progressively improve performance of a specific task. According to the disclosure, parameters of a machine learning model may be adjusted during a training phase based on training data. A trained machine learning model may then be used during an inference phase to make predictions or decisions based on input data.

The machine learning models described herein may take any suitable form or utilize any suitable techniques. For example, any of the machine learning models may utilize supervised learning, semi-supervised learning, unsupervised learning, or reinforcement learning techniques.

In supervised learning, the model may be built using a training set of data that contains both the inputs and corresponding desired outputs. Each training instance may include one or more inputs and a desired output. Training may include iterating through training instances and using an objective function to teach the model to predict the output for new inputs. In semi-supervised learning, a portion of the inputs in the training set may be missing the desired outputs.

In unsupervised learning, the model may be built from a set of data which contains only inputs and no desired outputs. The unsupervised model may be used to find structure in the data (e.g., grouping or clustering of data points) by discovering patterns in the data. Techniques that may be implemented in an unsupervised learning model include, e.g., self-organizing maps, nearest-neighbor mapping, k-means clustering, and singular value decomposition.

Reinforcement learning models may be given positive or negative feedback to improve accuracy. A reinforcement learning model may attempt to maximize one or more objectives/rewards. Techniques that may be implemented in a reinforcement learning model may include, e.g., Q-learning, temporal difference (TD), and deep adversarial networks.

The systems and methods of the disclosure may utilize one or more classification models. In a classification model, the outputs may be restricted to a limited set of values (e.g., one or more classes). The classification model may output a class for an input set of one or more input values. An input set may include road condition data, event data, sensor data, such as image data, radar data, LIDAR data and the like, and/or other data as would be understood by one of ordinary skill in the art. A classification model as described herein may, for example, classify certain driving conditions and/or environmental conditions, such as weather conditions, road conditions, and the like. References herein to classification models may contemplate a model that implements, e.g., any one or more of the following techniques: linear classifiers (e.g., logistic regression or naive Bayes classifier), support vector machines, decision trees, boosted trees, random forest, neural networks, or nearest neighbor.

One or more regression models may be used. A regression model may output a numerical value from a continuous range based on an input set of one or more values. References herein to regression models may contemplate a model that implements, e.g., any one or more of the following techniques (or other suitable techniques): linear regression, decision trees, random forest, or neural networks.

A machine learning model described herein may be or may include a neural network. The neural network may be any kind of neural network, such as a convolutional neural network, an autoencoder network, a variational autoencoder network, a sparse autoencoder network, a recurrent neural network, a deconvolutional network, a generative adversarial network, a forward-thinking neural network, a sum-product neural network, and the like. The neural network may include any number of layers. The training of the neural network (e.g., adapting the layers of the neural network) may use or may be based on any kind of training principle, such as backpropagation (e.g., using the backpropagation algorithm).

As described herein, the following terms may be used as synonyms: driving parameter set, driving model parameter set, safety layer parameter set, driver assistance, automated driving model parameter set, and/or the like (e.g., driving safety parameter set). These terms may correspond to groups of values used to implement one or more models for directing an agent to operate according to the manners described herein. Furthermore, throughout the present disclosure, the following terms may be used as synonyms: driving parameter, driving model parameter, safety layer parameter, driver assistance and/or automated driving model parameter, and/or the like (e.g., driving safety parameter), and may correspond to specific values within the previously described sets.

## Claims

1. An autonomous agent (200), comprising:

   memory means (210) for storing a path planning algorithm; and
   processing means (202) for executing the path planning algorithm to determine a path between a source location and a destination location, wherein the path planning algorithm includes:

setting the source location to a source node and the destination location to a destination node; and
performing an iterative processing of:

(i) determining whether a direct path exists between the source node and the destination node;
(ii) if a direct path exists between the source node and the destination node, constructing the path based on the direct path;
(iii) if a direct path does not exist between the source node and the destination node, determining a neighboring node of the source node and a neighboring node of the destination node; and
(iv) updating the neighboring node of the source node to the source node and updating the neighboring node of the destination node to the destination node and going to step (i),

wherein the processing means (202) is configured to determine the neighboring node of the source node and the neighboring node of the destination node based on a cost function, the cost function being:

$$F = g + h + k,$$

wherein, for the cost function for determining the neighboring node of the source node: $F$ is a cost for the neighboring node of the source node, $g$ is an Euclidean distance from the source node to the neighboring node of the source node, $h$ is an Euclidean distance from the destination node to the neighboring node of the source node, and $k$ is an Euclidean distance from the neighboring node of the source node to the destination location; and
wherein, for the cost function for determining the neighboring node of the destination node: $F$ is a cost for the neighboring node of the destination node, $g$ is an Euclidean distance from the destination node to the neighboring node of the destination node, *h* is an Euclidean distance from the source node to the neighboring node of the destination node, and *k* is an Euclidean distance from the neighboring node of the destination node to the source location.

2. The autonomous agent (200) of claim 1, wherein the path is constructed between the source node and the destination node in response to a determination that:

the source node and the destination node meet;
the updated source node crosses one of previously visited destination nodes or the updated destination node crosses one of previously visited source nodes in the iterative processing; and/or
the updated destination node reaches the source location or the updated source node reaches the destination location in the iterative processing.

3. The autonomous agent of any of claims 1-2, wherein the autonomous agent (200) is configured to navigate a roadmap defining an environment, the processing means (202) being further configured to determine a number of samples to be included in the roadmap based on an occupancy ratio of the environment, the occupancy ratio being defined in relation to a grid map of the environment.

4. The autonomous agent of claim 3, wherein the processing means (202) is configured to:

determine the number of samples to be included in the roadmap based further on a sample resolution value; and/or
dynamically adjust the occupancy ratio based on occupancy information.

5. The autonomous agent of any of claims 1-2, wherein the autonomous agent (200) is configured to navigate a roadmap defining an environment, the processing means (202) being further configured to determine a number of samples to be included in the roadmap based on the following equation:

$$S = \frac{W * H}{w * h} * n * k$$

wherein *S* is the number samples, *W* is a map width, *H* is a map height, *w* is a user-defined window width, *h* is a user-defined window height, *k* is an occupancy ratio of the map, and *n* is sample resolution value.

6. The autonomous agent of claim 5, wherein the processing means (202) is configured to dynamically adjust, during performance of the path planning algorithm:

k based on occupancy information; and/or
n based on a current time, a current date, and/or a current distance of the autonomous agent to the destination node.

7. The autonomous agent of claim 6, wherein the occupancy information is generated based on sensor data from one or more sensors (204) of the autonomous agent (200) and/or from one or more external sensing means.

8. The autonomous agent of any of claims 1-7, wherein the neighboring node of the source node and the neighboring node of the destination node are determined simultaneously.

9. A path planning method for an autonomous agent (200), comprising:

setting a source location to a source node and a destination location to a destination node; and
performing following steps iteratively:

(i) determining whether a direct path exists between the source node and the destination node;
(ii) if a direct path exists between the source node and the destination node, constructing the path based on the direct path;
(iii) if a direct path does not exist between the source node and the destination node, determining a neighboring node of the source node and a neighboring node of the destination node; and
(iv) updating the neighboring node of the source node to the source node and updating the neighboring node of the destination node to the destination node and going to step (i),

wherein the method further comprises determining the neighboring node of the source node and the neighboring node of the destination node based on a cost function, the cost function being:

$$F = g + h + k,$$

wherein, for the cost function for determining the neighboring node of the source node: *F* is a cost for the neighboring node of the source node, *g* is an Euclidean distance from the source node to the neighboring node of the source node, *h* is an Euclidean distance from the destination node to the neighboring node of the source node, and $k$ is an Euclidean distance from the neighboring node of the source node to the destination location; and

wherein, for the cost function for determining the neighboring node of the destination node: $F$ is a cost for the neighboring node of the destination node, $g$ is an Euclidean distance from the destination node to the neighboring node of the destination node, $h$ is an Euclidean distance from the source node to the neighboring node of the destination node, and $k$ is an Euclidean distance from the neighboring node of the destination node to the source location.

10. The method of claim 9, wherein the autonomous agent (200) is configured to navigate a roadmap defining an environment, the method further comprising determining a number of samples to be included in the roadmap based on the following equation:

$$S = \frac{W * H}{w * h} * n * k$$

wherein $S$ is the number samples, $W$ is a map width, $H$ is a map height, $w$ is a user-defined window width, $h$ is a user-defined window height, $k$ is an occupancy ratio of the map, and $n$ is sample resolution value.

**Patentansprüche**

1. Autonomer Agent (200), der Folgendes umfasst:

Speichermittel (210) zum Speichern eines Pfadplanungsalgorithmus; und
Verarbeitungsmittel (202) zum Ausführen des Pfadplanungsalgorithmus, um einen Pfad zwischen einem Quellort und einem Zielort zu bestimmen, wobei der Pfadplanungsalgorithmus Folgendes beinhaltet:

Einstellen des Quellorts auf einen Quellknoten und des Zielorts auf einen Zielknoten; und
Durchführen eines iterativen Verarbeitens von:

(i) Bestimmen, ob ein direkter Pfad zwischen dem Quellknoten und dem Zielknoten existiert;
(ii) falls ein direkter Pfad zwischen dem Quellknoten und dem Zielknoten existiert, Konstruieren des Pfades basierend auf dem direkten Pfad;

(iii) falls kein direkter Pfad zwischen dem Quellknoten und dem Zielknoten existiert, Bestimmen eines benachbarten Knotens des Quellknotens und eines benachbarten Knotens des Zielknotens; und
(iv) Aktualisieren des benachbarten Knotens des Quellknotens auf den Quellknoten und Aktualisieren des benachbarten Knotens des Zielknotens auf den Zielknoten und Weitergehen zu Schritt (i),

wobei das Verarbeitungsmittel (202) dazu ausgelegt ist, den benachbarten Knoten des Quellknotens und den benachbarten Knoten des Zielknotens basierend auf einer Kostenfunktion zu bestimmen, wobei die Kostenfunktion ist:

$$F = g + h + k,$$

wobei für die Kostenfunktion zum Bestimmen des benachbarten Knotens des Quellknotens: $F$ ein Kostenwert für den benachbarten Knoten des Quellknotens ist, $g$ eine euklidische Entfernung von dem Quellknoten zu dem benachbarten Knoten des Quellknotens ist, $h$ eine euklidische Entfernung von dem Zielknoten zu dem benachbarten Knoten des Quellknotens ist und $k$ eine euklidische Entfernung von dem benachbarten Knoten des Quellknotens zu dem Zielort ist; und
wobei für die Kostenfunktion zum Bestimmen des benachbarten Knotens des Zielknotens: $F$ ein Kostenwert für den benachbarten Knoten des Zielknotens ist, $g$ eine euklidische Entfernung von dem Zielknoten zu dem benachbarten Knoten des Zielknotens ist, $h$ eine euklidische Entfernung von dem Quellknoten zu dem benachbarten Knoten des Zielknotens ist und $k$ eine euklidische Entfernung von dem benachbarten Knoten des Zielknotens zu dem Quellort ist.

2. Autonomer Agent (200) nach Anspruch 1, wobei der Pfad zwischen dem Quellknoten und dem Zielknoten als Reaktion auf eine Bestimmung konstruiert ist, dass:

sich der Quellknoten und der Zielknoten treffen;
der aktualisierte Quellknoten einen der zuvor besuchten Zielknoten kreuzt oder der aktualisierte Zielknoten einen der zuvor besuchten Quellknoten in der iterativen Verarbeitung kreuzt; und/oder
der aktualisierte Zielknoten den Quellort erreicht oder der aktualisierte Quellknoten den Zielort in der iterativen Verarbeitung erreicht.

3. Autonomer Agent nach einem der Ansprüche 1-2, wobei der autonome Agent (200) dazu ausgelegt ist, eine Straßenkarte zu navigieren, die eine Umgebung definiert, wobei das Verarbeitungsmittel (202) ferner dazu ausgelegt ist, eine Anzahl von Abtastungen zu bestimmen, die in der Straßenkarte enthalten sein sollen, basierend auf einem Belegungsverhältnis der Umgebung, wobei das Belegungsverhältnis in Bezug auf eine Rasterkarte der Umgebung definiert ist.

4. Autonomer Agent nach Anspruch 3, wobei das Verarbeitungsmittel (202) ferner dazu ausgelegt ist:

   die Anzahl von Abtastungen zu bestimmen, die in die Straßenkarte aufzunehmen sind, ferner basierend auf einem Auflösungswert der Abtastung; und/oder
   das Belegungsverhältnis basierend auf Belegungsinformationen dynamisch anzupassen.

5. Autonomer Agent nach einem der Ansprüche 1-2, wobei der autonome Agent (200) dazu ausgelegt ist, eine Straßenkarte zu navigieren, die eine Umgebung definiert, wobei das Verarbeitungsmittel (202) ferner dazu ausgelegt ist, eine Anzahl von Abtastungen, die in der Straßenkarte enthalten sein sollen, basierend auf der folgenden Gleichung zu bestimmen:

$$S = \frac{W * H}{w * h} * n * k$$

   wobei $S$ die Anzahl von Abtastungen ist, $W$ eine Kartenbreite ist, $H$ eine Kartenhöhe ist, $w$ eine benutzerdefinierte Fensterbreite ist, $h$ eine benutzerdefinierte Fensterhöhe ist, $k$ ein Belegungsverhältnis der Karte ist und $n$ ein Auflösungswert der Abtastung ist.

6. Autonomer Agent nach Anspruch 5, wobei das Verarbeitungsmittel (202) dazu ausgelegt ist, während der Durchführung des Pfadplanungsalgorithmus dynamisch anzupassen:

   $k$ basierend auf Belegungsinformationen; und/oder
   $n$ basierend auf einer aktuellen Zeit, einem aktuellen Datum und/oder einer aktuellen Entfernung des autonomen Agenten zu dem Zielknoten.

7. Autonomer Agent nach Anspruch 6, wobei die Belegungsinformationen basierend auf Sensordaten von einem oder mehreren Sensoren (204) des autonomen Agenten (200) und/oder von einem oder mehreren externen Erfassungsmitteln erzeugt werden.

8. Autonomer Agent nach einem der Ansprüche 1-7, wobei der benachbarte Knoten des Quellknotens und der benachbarte Knoten des Zielknotens gleichzeitig bestimmt werden.

9. Pfadplanungsverfahren für einen autonomen Agenten (200), das Folgendes umfasst:

   Einstellen eines Quellorts auf einen Quellknoten und eines Zielorts auf einen Zielknoten; und
   Iteratives Durchführen der folgenden Schritte:

   (i) Bestimmen, ob ein direkter Pfad zwischen dem Quellknoten und dem Zielknoten existiert;
   (ii) falls ein direkter Pfad zwischen dem Quellknoten und dem Zielknoten existiert, Konstruieren des Pfades basierend auf dem direkten Pfad;
   (iii) falls kein direkter Pfad zwischen dem Quellknoten und dem Zielknoten existiert, Bestimmen eines benachbarten Knotens des Quellknotens und eines benachbarten Knotens des Zielknotens; und
   (iv) Aktualisieren des benachbarten Knotens des Quellknotens auf den Quellknoten und Aktualisieren des benachbarten Knotens des Zielknotens auf den Zielknoten und Weitergehen zu Schritt (i),

   wobei das Verfahren ferner das Bestimmen des benachbarten Knotens des Quellknotens und des benachbarten Knotens des Zielknotens basierend auf einer Kostenfunktion umfasst,
   wobei die Kostenfunktion Folgendes ist:

$$F = g + h + k,$$

   wobei für die Kostenfunktion zum Bestimmen des benachbarten Knotens des Quellknotens: $F$ ein Kostenwert für den benachbarten Knoten des Quellknotens ist, $g$ eine euklidische Entfernung von dem Quellknoten zu dem benachbarten Knoten des Quellknotens ist, $h$ eine euklidische Entfernung von dem Zielknoten zu dem benachbarten Knoten des Quellknotens ist und $k$ eine euklidische Entfernung von dem benachbarten Knoten des Quellknotens zu dem Zielort ist; und
   wobei für die Kostenfunktion zum Bestimmen des benachbarten Knotens des Zielknotens: $F$ ein Kostenwert für den benachbarten Knoten des Zielknotens ist, $g$ eine euklidische Entfernung von dem Zielknoten zu dem benachbarten Knoten des Zielknotens ist, *h* eine euklidische Entfernung von dem Quellknoten zu dem benachbarten Knoten des Zielknotens ist und *k* eine euklidische Entfernung von dem benachbarten Knoten des Zielknotens zu dem Quellort ist.

10. Verfahren nach Anspruch 9, wobei der autonome Agent (200) dazu ausgelegt ist, eine Straßenkarte zu navigieren, die eine Umgebung definiert, wobei das Verfahren ferner Bestimmen einer Anzahl von Abtastungen umfasst, die in der Straßenkarte enthalten sein sollen, basierend auf der folgenden Gleichung:

$$S = \frac{W * H}{w * h} * n * k$$

wobei *S* die Anzahl von Abtastungen ist, *W* eine Kartenbreite ist, H eine Kartenhöhe ist, *w* eine benutzerdefinierte Fensterbreite ist, *h* eine benutzerdefinierte Fensterhöhe ist, *k* ein Belegungsverhältnis der Karte ist und *n* ein Abtastauflösungswert ist.

## Revendications

1. Agent autonome (200), comprenant :

des moyens de mémoire (210) pour stocker un algorithme de planification de trajet ; et
des moyens de traitement (202) pour exécuter l'algorithme de planification de trajet afin de déterminer un trajet entre un emplacement source et un emplacement de destination, où l'algorithme de planification de trajet comprend les étapes suivantes :

définir l'emplacement source à un nœud source et l'emplacement de destination à un nœud de destination ; et
exécuter un traitement itératif comprenant de :

(i) déterminer s'il existe un trajet direct entre le nœud source et le nœud de destination ;
(ii) si un trajet direct existe entre le nœud source et le nœud de destination, construire le trajet sur la base du trajet direct ;
(iii) si un trajet direct n'existe pas entre le nœud source et le nœud de destination, déterminer un nœud voisin du nœud source et un nœud voisin du nœud de destination ; et
(iv) mettre à jour le nœud voisin du nœud source en le nœud source et mettre à jour le nœud voisin du nœud de destination en le nœud de destination et passer à l'étape (i),

où les moyens de traitement (202) sont configurés pour déterminer le nœud voisin du nœud source et le nœud voisin du nœud de destination sur la base d'une fonction de coût, la fonction de coût étant :

$$F = g + h + k,$$

où, pour la fonction de coût permettant de déterminer le nœud voisin du nœud source : *F* est un coût pour le nœud voisin du nœud source, *g* est une distance euclidienne entre le nœud source et le nœud voisin du nœud source, *h* est une distance euclidienne entre le nœud de destination et le nœud voisin du nœud source, et *k* est une distance euclidienne entre le nœud voisin du nœud source et l'emplacement de destination ; et
où, pour la fonction de coût permettant de déterminer le nœud voisin du nœud de destination : *F* est un coût pour le nœud voisin du nœud de destination, *g* est une distance euclidienne entre le nœud de destination et le nœud voisin du nœud de destination, *h* est une distance euclidienne entre le nœud source et le nœud voisin du nœud de destination, et *k* est une distance euclidienne entre le nœud voisin du nœud de destination et l'emplacement source.

2. Agent autonome (200) selon la revendication 1, dans lequel le trajet est construit entre le nœud source et le nœud de destination en réponse à une détermination que :

le nœud source et le nœud de destination se rencontrent ;
le nœud source mis à jour croise l'un des nœuds de destination précédemment visités ou le nœud de destination mis à jour croise l'un des nœuds sources précédemment visités dans le traitement itératif ; et/ou
le nœud de destination mis à jour atteint l'emplacement source ou le nœud source mis à jour atteint l'emplacement de destination dans le traitement itératif.

3. Agent autonome selon l'une quelconque des revendications 1 et 2, dans lequel l'agent autonome (200) est configuré pour naviguer sur une feuille de route définissant un environnement, les moyens de traitement (202) étant en outre configurés pour déterminer un nombre d'échantillons à inclure dans la feuille de route en fonction d'un taux d'occupation de l'environnement, le taux d'occupation étant défini par rapport à une carte quadrillée de l'environnement.

4. Agent autonome selon la revendication 3, dans lequel les moyens de traitement (202) sont configurés pour :

   déterminer le nombre d'échantillons à inclure dans la feuille de route en se basant en outre sur une valeur de résolution d'échantillon ; et/ou ajuster dynamiquement le taux d'occupation en fonction des informations d'occupation.

5. Agent autonome selon l'une quelconque des revendications 1 et 2, dans lequel l'agent autonome (200) est configuré pour naviguer sur une feuille de route définissant un environnement, les moyens de traitement (202) étant en outre configurés pour déterminer un nombre d'échantillons à inclure dans la feuille de route sur la base de l'équation suivante :

$$S = \frac{W * H}{w * h} * n * k$$

   où $S$ est le nombre d'échantillons, $W$ est la largeur de la carte, $H$ est la hauteur de la carte, $w$ est la largeur de la fenêtre définie par l'utilisateur, $h$ est la hauteur de la fenêtre définie par l'utilisateur, $k$ est le taux d'occupation de la carte et $n$ est la valeur de la résolution de l'échantillon.

6. Agent autonome selon la revendication 5, dans lequel les moyens de traitement (202) sont configurés pour ajuster dynamiquement, pendant l'exécution de l'algorithme de planification de trajet :

   $k$ en fonction des informations d'occupation ; et/ou
   $n$ en fonction de l'heure actuelle, de la date actuelle et/ou d'une distance actuelle de l'agent autonome par rapport au nœud de destination.

7. Agent autonome selon la revendication 6, dans lequel les informations d'occupation sont générées sur la base des données de capteur provenant d'un ou plusieurs capteurs (204) de l'agent autonome (200) et/ou d'un ou plusieurs moyens de détection externes.

8. Agent autonome selon l'une quelconque des revendications 1 à 7, dans lequel le nœud voisin du nœud source et le nœud voisin du nœud de destination sont déterminés simultanément.

9. Procédé de planification de trajet pour un agent autonome (200), comprenant les étapes suivantes :

définir un emplacement source à un nœud source et un emplacement de destination à un nœud de destination ; et
exécuter de manière itérative les étapes suivantes :

   (i) déterminer s'il existe un trajet direct entre le nœud source et le nœud de destination ;
   (ii) si un trajet direct existe entre le nœud source et le nœud de destination, construire le trajet sur la base du trajet direct ;
   (iii) si un trajet direct n'existe pas entre le nœud source et le nœud de destination, déterminer un nœud voisin du nœud source et un nœud voisin du nœud de destination ; et
   (iv) mettre à jour le nœud voisin du nœud source en le nœud source et mettre à jour le nœud voisin du nœud de destination en le nœud de destination et passer à l'étape (i),

le procédé comprenant en outre de déterminer le nœud voisin du nœud source et le nœud voisin du nœud de destination sur la base d'une fonction de coût, la fonction de coût étant :

$$F = g + h + k,$$

où, pour la fonction de coût permettant de déterminer le nœud voisin du nœud source : $F$ est un coût pour le nœud voisin du nœud source, $g$ est une distance euclidienne entre le nœud source et le nœud voisin du nœud source, $h$ est une distance euclidienne entre le nœud de destination et le nœud voisin du nœud source, et $k$ est une distance euclidienne entre le nœud voisin du nœud source et l'emplacement de destination ; et
où, pour la fonction de coût permettant de déterminer le nœud voisin du nœud de destination : $F$ est un coût pour le nœud voisin du nœud de destination, $g$ est une distance euclidienne entre le nœud de destination et le nœud voisin du nœud de destination, $h$ est une distance euclidienne entre le nœud source et le nœud voisin du nœud de destination, et $k$ est une distance euclidienne entre le nœud voisin du nœud de destination et l'emplacement source.

10. Procédé selon la revendication 9, dans lequel l'agent autonome (200) est configuré pour naviguer sur une feuille de route définissant un environnement, le procédé comprenant en outre de déterminer un nombre d'échantillons à inclure dans la feuille de route sur la base de l'équation suivante :

$$S = \frac{W * H}{w * h} * n * k$$

où $S$ est le nombre d'échantillons, $W$ est la largeur de la carte, $H$ est la hauteur de la carte, $w$ est la largeur de la fenêtre définie par l'utilisateur, $h$ est la hauteur de la fenêtre définie par l'utilisateur, $k$ est le taux d'occupation de la carte et $n$ est la valeur de la résolution de l'échantillon.

FIG. 1

EP 4 174 609 B1

200

Processing Circuitry 202

Sensor(s) 204

Transceiver 206

Memory 210

ITS 212

Sampler

Path Planner

FIG. 2A

200

Sensor(s) 204

Transceiver 206

Controller 213

Processing Circuitry 202

Memory 210

ITS 212

Sampler

Path Planner

**FIG. 2B**

Controller <u>213</u>

Sampler <u>214</u>

Path Planner <u>215</u>

FIG. 2C

300

Processing Circuitry 302

Sensor(s) 304

Transceiver 306

Memory 310

ITS 313

Sampler

Path Planner

**FIG. 3**

400

offline | online

Env := 2D Grid

402

Adaptive Sampling
to generate RM

404

RM generated

406

Env := RM
$q_{start}$ := Start
$q_{goal}$ := Goal

408

410

Direct Path?
($q_{start}, q_{goal}$)    yes

no

Generate Path

420

Path

422

412

$q_{start} = q_{goal}$ ?    yes

no

414

($q_{start} | q_{goal}$)
Visit each
other?    yes

no

416

$q_{start}$ = goal |
$q_{goal}$ = start    yes

no

$q'_{start}$ = min Fs(g,h,k)
$q'_{goal}$ = min Fg(g,h,k)
$q_{start}$ =$q'_{start}$
$q_{goal}$ =$q'_{goal}$    418

## FIG. 4

Global map with static objects

Global path generated with ITS

Goal

Local path generated with ITS. This Path overrides the global Path.

Local occupancy map info from perception module

Dynamic object

102

Start

**FIG. 5A**

34

Start Pose 502

Goal Pose 504

ITS Global Path
Planning
506

Global Path
508

Global
Occupancy
Grid 510

Intelligent ITS
Sampling 512

Global
Roadmap 514

Multi-Modal
Perception
516

Local
Occupancy
Grid 518

Intelligent
Adaptive ITS
Sampling 520

Local
Roadmap
522

ITS Local Path
Planning
524

local
path

Control
commands
526

Robot

FIG. 5B

FIG. 6A

**Parent_s array**

**Parent_g array**

start $q'_{start}$ $q'_{goal}$ goal

1  2  3       4  5  6

1
2
3

*s_path*

4  5  6

*g_path*

1  2  3  4  5  6

*path*

*Parent_s*: The parent of node 3 is node 2 and the parent of node 2 is node 1.
*Parent_g*: The parent of node 4 is node 5 and the parent of node 5 is node 6

?

$q_{start}$ $q'_{start}$

**FIG. 6B**

**FIG. 7A**

**FIG. 7B**

**FIG. 7C**

Goal

Source

PRM+ITS
PRM+A*
2D Grid+A*

EP 4 174 609 B1

Map 1

**FIG. 7D**

**FIG. 8A**

**FIG. 8B**

FIG. 9A   FIG. 9B   FIG. 9C

Map 2

**FIG. 9D**

EP 4 174 609 B1

**FIG. 10B**

**FIG. 10A**

FIG. 11B

FIG. 11A

**FIG. 12B**

**FIG. 12A**

44

FIG. 13

FIG. 14A

FIG. 14B

FIG. 14C

FIG. 14D

**FIG. 15A**

**FIG. 15B**

**FIG. 16A**

**FIG. 16B**

**FIG. 17B**

**FIG. 17A**

**FIG. 18A**

**FIG. 18B**

**FIG. 19A**

**FIG. 19B**

FIG. 20A — DRM map1 - ITS gain factor

FIG. 20B — DRM map2 - ITS gain factor

FIG. 20C — PRM map1 - ITS gain factor

FIG. 20D — PRM map2 - ITS gain factor

FIG. 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63227755

### Non-patent literature cited in the description

- **KUFFNER J.J. et al.** RRT-connect: An efficient approach to single-query path planning. *Robotics and Automation, 2000. Proceedings. ICRA '00. IEEE International Conference on*, 01 January 2000, vol. 2, 995-1001

- Informed RRT*-Connect: An Asymptotically Optimal Single-Query Path Planning Method. **MASHAYEKHI REZA et al.** IEEE ACCESS. IEEE, 23 January 2020, vol. 8, 19842-19852